# EUROPÄISCHE PATENTSCHRIFT

(11) **EP 2 139 744 B1**
(45) Veröffentlichungstag und Bekanntmachung des Hinweises auf die Patenterteilung: **25.12.2013**
(21) Anmeldenummer: 08735659.8
(22) Anmeldetag: 01.04.2008
(51) Int. Cl.: B61K 9/08, B60L 3/00, B60T 7/12, G08G 1/16, B61D 15/06

(54) **ERKENNUNG VON DIE SICHERHEIT DER PASSAGIERE BEEINTRÄCHTIGENDEN ZUSTÄNDEN BEI EINEM SCHIENENFAHRZEUG**
DETECTION OF CONDITIONS COMPROMISING PASSENGER SAFETY IN A RAILWAY VEHICLE
IDENTIFICATION D'ÉTATS COMPROMETTANT LA SÉCURITÉ DES PASSAGERS D'UN VÉHICULE FERROVIAIRE

(30) Priorität: 04.04.2007 DE 102007016711
(43) Veröffentlichungstag der Anmeldung: 06.01.2010
(73) Patentinhaber: Bombardier Transportation GmbH, 10785 Berlin (DE)
(72) Erfinder: GRAF, Thomas, A-1120 Wien (AT); NEWESELY, Gerald, A-1090 Wien (AT)
(74) Vertreter: Cohausz & Florack
(86) Internationale Anmeldenummer: PCT/EP2008/053888
(87) Internationale Veröffentlichungsnummer: WO 2008/122547

(56) Entgegenhaltungen:
- WO-A-2005/070742
- WO-A-2005/105536
- DE-A1- 4 139 469
- US-A- 5 251 680

## Beschreibung

Die vorliegende Erfindung betrifft ein Schienenfahrzeug mit einer Fahrzeugsteuerung und wenigstens einer mit der Fahrzeugsteuerung verbundenen Erfassungseinrichtung, wie es im Oberbegriff des Anspruchs 1 definiert ist. Die Fahrzeugsteuerung ist dazu ausgebildet, wenigstens einen Zustandsparameter des Fahrzeugs zu beeinflussen. Die wenigstens eine Erfassungseinrichtung ist dazu ausgebildet, einen aktuellen Zustandsparameter des Fahrzeugs und/oder der Umgebung des Fahrzeugs zu erfassen und ein entsprechendes Zustandssignal auszugeben, wobei vorgebbare Werte des erfassten Zustandsparameters eine unmittelbare Gefährdung der Sicherheit der Fahrgäste des Fahrzeugs repräsentieren. Die Erfindung betrifft weiterhin ein entsprechendes Verfahren zur Steuerung eines Schienenfahrzeugs.

Bei heutigen Schienenfahrzeugen wird in der Regel eine Reihe von Zustandsparametern überwacht, welche bestimmte Zustände des Fahrzeugs repräsentieren und eine Einstufung ermöglichen, ob ein Zustand des Fahrzeugs vorliegt, der sich innerhalb der für den ordnungsgemäßen Betrieb des Fahrzeugs vorgegebenen Grenzen befindet, oder ob aufgrund von Fehlfunktionen eine Gefährdung für die Passagiere des Fahrzeugs besteht.

Zum einen werden in Schienenfahrzeugen in der Regel zahlreiche Sensoren eingesetzt, welche erfassen, ob bestimmte Komponenten des Fahrzeugs ihre vorgesehene Funktion erfüllen. So werden beispielsweise die Türen des Fahrzeugs darauf überwacht, ob sie in der vorgegebenen Weise schließen, um sicherzustellen, dass nicht durch eine Fehlfunktion, beispielsweise ein mögliches Öffnen während der Fahrt, eine Gefährdung für die Passagiere besteht. Andererseits werden Sensoren eingesetzt, die unmittelbar den Eintritt einer für die Passagiere gefährlichen Situation erfassen, wie beispielsweise Rauch- bzw. Brandmelder.

Spricht eines dieser Systeme an, wird in der Regel der Fahrzeugführer über eine entsprechende Signaleinrichtung (optisch und/oder akustisch) über diesen eine Gefahr für die Passagiere darstellenden Zustand informiert. Dieser muss dann in der Regel entweder entsprechende Gegenmaßnahmen einleiten. Ebenso kann aber auch vorgesehen sein, dass automatisch Gegenmaßnahmen zur Verringerung der Gefährdung der Passagiere eingeleitet werden, beispielsweise im Falle des Ansprechens eines Rauch- bzw. Brandmelders automatisch eine entsprechende Löschanlage aktiviert wird.

Ähnliche Systeme sind aus der WO 2005/105536 A1 sowie der DE 41 39 469 A1 bekannt.

Allen diesen Systemen ist gemeinsam, dass sie singulär auf ihren vorgegebenen Einsatzzweck ausgelegt sind, sodass es dem Fahrzeugführer überlassen ist, komplexe Gefährdungssituationen zu erkennen und entsprechende Gegenmaßnahmen einzuleiten. Hierbei kann es insbesondere bei mehr oder weniger gleichzeitig auftretenden unterschiedlichen Gefährdungen der Passagiere zu Fehleinschätzungen oder zur Nichtberücksichtigung einzelner Gefährdungen seitens des Fahrzeugführers kommen, welche erhebliche Auswirkungen auf die Sicherheit der Fahrgäste haben können.

Aus der WO 2005/070742 A1 und der US 5,251,680 sind hingegen gattungsgemäße Systeme bekannt, bei denen die Fahrzeugsteuerung anhand der aktuellen Werte der erfassten Zustandsparameter eine automatische Gefahrenklassifikation vornimmt und Reaktionen des Fahrzeugs einleitet, welche der aktuellen Gefahrenklassifikation entsprechen. Problematisch ist hierbei, dass die Reaktion anhand der jeweils aktuellen Gefahrenklassifikation erfolgt, sodass eine vorausschauende Reaktion nicht möglich ist bzw. in ungünstigen Fällen unerwünscht drastische Reaktionen erforderlich werden.

Der vorliegenden Erfindung liegt daher die Aufgabe zu Grunde, ein Schienenfahrzeug bzw. ein Verfahren der eingangs genannten Art zur Verfügung zu stellen, welches die oben genannten Nachteile nicht oder zumindest in geringerem Maße aufweist und insbesondere auf zuverlässige Weise auch in komplexen Gefährdungssituationen die Einleitung angemessener Gegenmaßnahmen ermöglicht.

Die vorliegende Erfindung löst diese Aufgabe ausgehend von einem Schienenfahrzeug gemäß dem Oberbegriff des Anspruchs 1 durch die im kennzeichnenden Teil des Anspruchs 1 angegebenen Merkmale. Sie löst diese Aufgabe weiterhin ausgehend von einem Verfahren gemäß dem Oberbegriff des Anspruchs 10 durch die im kennzeichnenden Teil des Anspruchs 10 angegebenen Merkmale.

Der vorliegenden Erfindung liegt die technische Lehre zu Grunde, dass man auf zuverlässige Weise auch in komplexen Gefährdungssituationen der Passagiere des Fahrzeugs die Einleitung angemessener Gegenmaßnahmen ermöglicht, wenn die Fahrzeugsteuerung dem aktuellen Zustand des Fahrzeugs und/oder seiner Umgebung nach vorgebbaren Gefahrenklassifikationskriterien eine Gefahrenklassifikation zuordnet, anhand derer dann eine entsprechende Reaktion der Fahrzeugsteuerung erfolgt. Die Klassifikation erfolgt dabei unter Verwendung von wenigstens zwei unterschiedlichen Größen, die entweder separat erfasst oder voneinander nach geeigneten Vorgaben abgeleitet sind, sodass auch komplexere Gefährdungssituationen zutreffend eingestuft werden können und hierauf angemessen reagiert werden kann.

Bevorzugt werden eine Vielzahl von Erfassungseinrichtungen (z. B. Sensoren oder dergleichen) für eine Vielzahl unterschiedlicher Zustandsparameter über die Fahrzeugsteuerung miteinander vernetzt, sodass auch hochkomplexe Gefährdungssituationen der Fahrgäste zuverlässig erfasst und zutreffend klassifiziert werden können sowie durch geeignete Gegenmaßnahmen eine schnelle Reduktion der Gefährdung der Passagiere möglich ist. Mithin kann also ein vernetztes, aktives Schutzsystem für die Passagiere des Schienenfahrzeugs implementiert werden, welches sich insbesondere im öffentlichen Personennahverkehr (ÖPNV) mit seiner hohen Verkehrsdichte und seinen hohen Passagierzahlen vorteilhaft einsetzen lässt.

Die Klassifikationskriterien, die sich daraus ergebende Klassifikation sowie die sich daraus ergebenden Reaktionen können in geeigneter Weise vorab, beispielsweise anhand entsprechender realer oder simulierter Gefährdungsszenarien einmalig festgelegt sein. Ebenso ist es aber auch möglich, anhand der Auswertung real von dem Fahrzeug durchlaufener Situationen einen Lerneffekt zu erzielen, um so die Klassifikation und/oder die Reaktion zu optimieren. Letztlich kann diese Auswertung zumindest in Teilen sogar von der Fahrzeugsteuerung selbst vorgenommen werden, sodass gegebenenfalls sogar ein selbstlernendes System implementiert werden kann.

Für die Gefahrenklassifikation können je nach Anzahl der zu berücksichtigenden Zustandgrößen beliebige geeignete Kennlinien und/oder Kennfelder (beliebig hoher Dimension) aufgestellt werden. Weiterhin können diese Kennlinien bzw. Kennfelder wiederum untereinander verknüpft sein, um für einen bestimmten Zustand mit n zu berücksichtigenden Zustandgrößen jeweils zu einer geeigneten Gefahrenklassifikation zu gelangen.

Es sei an dieser Stelle angemerkt, dass als unmittelbare Gefährdung der Sicherheit der Fahrgäste des Fahrzeugs im Sinne der vorliegenden Erfindung jeglicher drohender oder bestehender Zustand, der eine unmittelbare Auswirkung auf die Unversehrtheit eines Fahrgastes haben kann. Dies schließt unter anderem die Gefährdung ein, durch übermäßige äußere Krafteinwirkung, durch Feuer oder Hitze oder durch Kontakt mit gesundheitsgefährdenden Stoffen einen körperlichen Schaden zu erleiden.

Gemäß einem ersten Aspekt betrifft die vorliegende Erfindung daher ein Schienenfahrzeug mit einer Fahrzeugsteuerung und wenigstens einer mit der Fahrzeugsteuerung verbundenen Erfassungseinrichtung. Die Fahrzeugsteuerung ist dabei dazu ausgebildet, wenigstens einen Zustandsparameter des Fahrzeugs zu beeinflussen, während die wenigstens eine Erfassungseinrichtung dazu ausgebildet ist, einen aktuellen Zustandsparameter des Fahrzeugs und/oder der Umgebung des Fahrzeugs zu erfassen und ein entsprechendes Zustandssignal auszugeben, wobei vorgebbare Werte des erfassten Zustandsparameters eine unmittelbare Gefährdung der Sicherheit der Fahrgäste des Fahrzeugs repräsentieren. Die Fahrzeugsteuerung weist eine Gefahrenerkennungseinheit auf, die dazu ausgebildet ist, dem aktuellen Zustand des Fahrzeugs unter Verwendung eines ersten Zustandssignals der wenigstens einen Erfassungseinrichtung und unter Verwendung einer aus dem ersten Zustandssignal abgeleiteten Zustandsgröße und/oder wenigstens eines zweiten Zustandssignals wenigstens einer weiteren Erfassungseinrichtung nach vorgebbaren Gefahrenklassifikationskriterien eine aktuelle Gefahrenklassifikation zuzuordnen. Die Fahrzeugsteuerung weist weiterhin eine Reaktionseinheit aus, die dazu ausgebildet ist, in Abhängigkeit von der aktuellen Gefahrenklassifikation eine den wenigstens einen Zustandsparameter des Fahrzeugs beeinflussende Reaktion auszulösen.

Wie bereits oben erwähnt, ist vorzugsweise eine große Anzahl von Erfassungseinrichtungen über die Fahrzeugsteuerung miteinander vernetzt, um hochkomplexe Gefährdungssituationen zuverlässig erfassen und klassifizieren zu können. Vorzugsweise ist zumindest ein Großteil der Erfassungseinrichtungen, die entsprechende gefährdungsrelevante Zustandgrößen erfassen, auf die beschriebene Weise miteinander vernetzt.

Bei der aus dem ersten Zustandsignal abgeleiteten Zustandgröße kann es sich grundsätzlich um eine beliebige geeignete Zustandgrößen handeln, welche alleine oder in Kombination mit anderen erfassten oder abgeleiteten Größen eine Klassifikation der aktuellen Gefährdungssituation ermöglicht. Vorzugsweise handelt es sich bei der aus dem ersten Zustandssignal abgeleiteten Zustandsgröße um eine zeitliche Ableitung des ersten Zustandssignals. Wird beispielsweise ein Abstand zu einem potentiellen Hindernis im Fahrweg des Fahrzeugs gemessen, so wird vorzugsweise bei der Klassifikation auch die zeitliche Änderung des Abstands (mithin also die Annäherungsgeschwindigkeit an das Hindernis) berücksichtigt, um über eine geeignete Klassifizierung geeignete Gegenmaßnahmen einzuleiten. So können beispielsweise auch bei der großen Entfernung aber einer hohen Annäherungsgeschwindigkeit frühzeitig Maßnahmen zur Vermeidung einer Kollision, beispielsweise ein gezielter Bremseingriff, unternommen werden.

Hiermit ist es in einfacher Weise möglich, die zeitliche Entwicklung des Zustandsignals zu berücksichtigen und/oder abzuschätzen, um hieraus eine zutreffende Einschätzung über die weitere Entwicklung der betreffenden Zustandgröße zu erhalten und somit eine vorausschauende, gegebenenfalls präventive Reaktion zu ermöglichen.

Bei dem erfindungsgemäßen Schienenfahrzeug ist weiterhin vorgesehen, dass die Fahrzeugsteuerung dazu ausgebildet ist, eine Historie wenigstens eines Zustandsparameters des Fahrzeugs und/oder der Umgebung des Fahrzeugs zu speichern. Die Gefahrenerkennungseinheit ist dann dazu ausgebildet, die Zuordnung der aktuellen Gefahrenklassifikation unter Verwendung der Historie vorzunehmen. Hiermit ist es möglich, die zeitliche Entwicklung der betreffenden Zustandgröße abzuschätzen und somit eine vorausschauende, gegebenenfalls präventive Reaktion zu initiieren.

Der Umfang der Historie kann sich nach der Art des Zustandsparameters richten. Typischerweise ist der Umfang der Historie jedoch so bemessen, dass er für eine entsprechend aussagekräftige Abschätzung der Entwicklung des Zustandsparameters ausreicht.

Die Reaktionseinheit kann dazu ausgebildet sein, ausschließlich in Abhängigkeit von der dem aktuellen Zustand des Fahrzeugs und/oder seiner Umgebung zugeordneten aktuellen Gefahrenklassifikation eine entsprechende Reaktion auszulösen. Vorzugsweise ist jedoch vorgesehen, dass die Reaktionseinheit eine zeitliche Änderung der aktuellen Gefahrenklassifikation erfasst und in Abhängigkeit von der zeitlichen Änderung der aktuellen Gefahrenklassifikation eine entsprechende Reaktion auslöst. Dies ist im Sinne eines vorzeitigen, präventiven Eingreifens bei einer sich schnell erhöhenden Gefährdung der Passagiere von Vorteil.

Als zu erfassende und zu verarbeitende Zustandsparameter kommen grundsätzlich beliebige Zustandsparameter infrage, welche geeignet sind, eine Gefährdungssituation der Passagiere des Fahrzeugs zu kennzeichnen. Demgemäß kann wenigstens eine Erfassungseinrichtung vorgesehen sein, die einen die Bewegung zumindest eines Teils des Fahrzeugs, insbesondere die Geschwindigkeit und/oder die Beschleunigung zumindest eines Teils des Fahrzeugs, charakterisierenden Zustandsparameter erfasst. Hierbei kann es sich im einfachsten Fall um die Fahrgeschwindigkeit und/oder die Beschleunigung des Fahrzeugs handeln, welche Einfluss auf die Gefahrenklassifikation eines Zustands des Fahrzeugs hat.

So sind bestimmte Zustände des Fahrzeugs beim einer hohen Geschwindigkeit oder Beschleunigung mit einer deutlich höheren Gefährdung der Fahrgäste verbunden als bei einer niedrigen Geschwindigkeit bzw. Beschleunigung. So geht beispielsweise ein Lösen der Türverriegelung bei hohen Fahrgeschwindigkeiten bzw. Beschleunigungen mit einer deutlich größeren Gefährdung für die Fahrgäste einher als im Stand oder bei geringen Geschwindigkeiten bzw. Beschleunigungen. Die hiervon ausgehende Gefährdung kann dank der Verarbeitung beider Zustandgrößen zutreffend klassifiziert werden und eine entsprechende Reaktion auslösen. So kann beispielsweise beim Lösen der Türverriegelung bei hohen Fahrgeschwindigkeiten eine schnelle Reduktion der Geschwindigkeit, gegebenenfalls unter Ausgabe entsprechender Wamhinweise an die Passagiere erfolgen, während bei geringen Fahrgeschwindigkeiten lediglich eine langsame Reduktion der Geschwindigkeit erfolgt.

Zusätzlich oder alternativ kann wenigstens eine Erfassungseinrichtung vorgesehen sein, die einen den Zustand einer Einrichtung des Fahrzeugs, insbesondere den Zustand einer Stelleinrichtung des Fahrzeugs, charakterisierenden Zustandsparameter erfasst. Hierbei kann es sich beispielsweise um den Zustand des von dem Fahrzeugführer betätigten Fahrhebel handeln, mit dem dieser die Geschwindigkeit des Fahrzeugs einstellt. Wird beispielsweise eine abrupte Änderung der Fahrhebelstellung erfasst, so kann wiederum in Abhängigkeit von weiteren Zustandgrößen, beispielsweise der aktuellen Geschwindigkeit, eine entsprechende Reaktion ausgelöst werden. Wird beispielsweise über eine schnelle Änderung der Hebelstellung erfasst, dass der Fahrzeugführer eine starke Bremsung einleiten will, so kann der Bremseingriff beispielsweise in Abhängigkeit von der aktuellen Geschwindigkeit und/oder der Annäherungsgeschwindigkeit an ein Hindernis gesteuert werden.

Zusätzlich oder alternativ kann wenigstens eine Erfassungseinrichtung vorgesehen sein, die einen die Position des Fahrzeugs charakterisierenden Zustandsparameter erfasst. Hierbei kann es sich beispielsweise um ein hinlänglich bekanntes Modul der Satellitennavigation (GPS etc.) oder der Navigation mit anderen externen Hilfsmitteln (Mobilfunkortung, Passieren von Ortungsstationen, optische Erfassung der Fahrwegsumgebung etc.) handeln. Es kann aber auch ein rein fahrzeuggestütztes Modul sein, welches beispielsweise anhand eines bekannten Streckenverlaufs und der Fahrgeschwindigkeit die Position des Fahrzeugs bestimmt. Ebenso können natürlich auch zu Redundanzzwecken beliebige Kombinationen dieser Einrichtungen vorgesehen sein.

Die Berücksichtigung der Position des Schienenfahrzeugs ist für die Gefahrenklassifikation von besonderem Vorteil, da sich hierdurch die Gefahrenklassifikation bestimmter Zustände deutlich vereinfacht. Insbesondere die Klassifikation hinsichtlich eines Kollisionsrisikos mit einem Hindernis wird hierdurch deutlich einfacher. So ist aufgrund des für das Schienenfahrzeug fest vorgegebenen Fahrwegs und des auf diesem Fahrweg einzuhaltenden Lichtraums eine einfache Einordnung möglich, ob ein erfasster Gegenstand tatsächlich ein gefährliches Hindernis darstellt. Hierbei muss lediglich erfasst werden, ob er in den bekannten Lichtraum des vorgegebenen Fahrwegs hineinragt. Ebenso können andere Zustände des Fahrzeugs an bestimmten Punkten des bekannten Fahrwegs (beispielsweise in einem Tunnel oder auf einer Brücke) eine größere Gefährdung darstellen als auf freier Strecke, auf der beispielsweise eine Evakuierung des Fahrzeugs und ein Zugang zum Fahrzeug für Rettungskräfte ohne Weiteres möglich ist bzw. Gefahrensituationen (z. B. Brände oder Rauchentwicktung) sich erst nach längerer Zeit auf das gesamte Fahrzeug auswirken.

Zusätzlich oder alternativ kann wenigstens eine Erfassungseinrichtung vorgesehen sein, die einen den Zustand der Umgebung des Fahrzeugs, insbesondere den Zustand des Fahrwegs vor dem Fahrzeug und dessen unmittelbarer Umgebung, charakterisierenden Zustandsparameter erfasst. Hierbei kann es sich beispielsweise um geeignete Einrichtungen (z. B. auf der Basis von Radar, Ultraschall etc.) zur Erkennung eines Hindernisses im Fahrweg handeln.

Schließlich kann zusätzlich oder alternativ wenigstens eine Erfassungseinrichtung vorgesehen sein, die einen den Zustand der Energieversorgung des Fahrzeugs charakterisierenden Zustandsparameter erfasst. Dies ist insbesondere wiederum im Zusammenhang mit der Erfassung der Position des Schienenfahrzeugs von besonderem Vorteil, da an bestimmten Punkten (z. B. in einem Tunnel) ein Ausfall der Stromversorgung eine größere Gefährdung für die Fahrgäste darstellt als auf freier Strecke.

Bei bevorzugten Varianten des erfindungsgemäßen Schienenfahrzeugs ist eine Erkennung von Hindernissen im Fahrweg vorgesehen. Hierzu ist bevorzugt wenigstens eine Erfassungseinrichtung vorgesehen, die als Zustandsparameter für den Zustand der Umgebung des Fahrzeugs einen für das Vorhandensein eines Hindernisses in Fahrtrichtung vor dem Fahrzeug repräsentativen Parameter erfasst, wobei die Erfassungseinrichtung insbesondere als für das Vorhandensein eines Hindernisses repräsentativen Parameter eine Distanz des Fahrzeugs zu einem Hindernis in Fahrtrichtung vor dem Fahrzeug erfasst.

Die Erkennung und Einstufung eines Körpers als gefährliches Hindernis kann auf beliebige geeignete Weise erfolgen. Wie bereits erwähnt ist bevorzugt vorgesehen, dass die Gefahrenerkennungseinheit die Zuordnung der aktuellen Gefahrenklassifikation unter Verwendung des für das Vorhandensein eines Hindernisses repräsentativen Parameters und einer hieraus abgeleiteten Größe vornimmt. Vorzugsweise repräsentiert die abgeleitete Größe eine zeitliche Änderung der Distanz zu dem Hindernis, sodass bei der Gefahrenklassifikation nicht nur die tatsächliche Entfernung zum Hindernis sondern auch die Annäherungsgeschwindigkeit berücksichtigt wird, auf welche dann mit unterschiedlich starken Gegenreaktionen (Bremsen) reagiert werden kann.

Wie bereits erwähnt, erfolgt bei einer solchen Überwachung auf drohende Kollisionen bevorzugt eine Berücksichtigung der aktuellen Position des Schienenfahrzeugs, da bei dem Schienenfahrzeug durch eine einfache Bestimmung der Position und/oder Bewegung des potentiellen Hindernisses bezüglich des bekannten Lichtraums entlang des Fahrwegs bei der Gefahrenklassifikation entschieden werden kann, ob es sich um ein potentiell gefährliches Hindernis handelt oder nicht. Vorzugsweise ist daher wenigstens eine Erfassungseinrichtung vorgesehen, die einen die Position des Fahrzeugs charakterisierenden Zustandsparameter erfasst, und die Gefahrenerkennungseinheit ist dazu ausgebildet, die Zuordnung der aktuellen Gefahrenklassifikation unter Verwendung des für das Vorhandensein des Hindernisses repräsentativen Parameters und des die Position des Fahrzeugs charakterisierenden Zustandsparameters vorzunehmen.

Grundsätzlich kann die Reaktionseinheit bei einer entsprechend hoch eingestuften Kollisionsgefahr auf beliebige geeignete Weise reagieren. Vorzugsweise ist Reaktionseinheit dazu ausgebildet, in Abhängigkeit von der aktuellen, eine drohende Kollision mit dem Hindernis repräsentierenden Gefahrenklassifikation eine Signaleinrichtung zu aktivieren. Hierbei kann vorrangig dem Fahrer, den Passagieren oder anderen Verkehrsteilnehmern außerhalb des Fahrzeugs eine drohende Kollision über geeignete (optische und/oder akustische) Mittel signalisiert werden. Ebenso kann automatisch eine entsprechende Benachrichtigung einer entfernten Leitstelle erfolgen.

Die Einleitung geeigneter Gegenmaßnahmen kann dann dem Fahrzeugführer überlassen sein. Zusätzlich oder alternativ kann durch die Reaktionseinheit eine Betätigung der Bremsen des Fahrzeugs ausgelöst werden, wobei insbesondere die Stärke der Betätigung der Bremsen in Abhängigkeit von der aktuellen Gefahrenklassifikation erfolgt. Dies kann insbesondere dann der Fall sein, wenn innerhalb einer vorgebbaren Zeitspanne keine adäquate Reaktion seitens des Fahrzeugführers erfolgt.

Weiterhin kann die Reaktionseinheit eine vorbereitende Betätigung von das Crashverhalten des Fahrzeugs beeinflussenden Einrichtungen aktivieren. Hierzu zählen insbesondere Einrichtungen zum Stoßenergieverzehr, die entsprechend aktiviert (z. B. ausgeklappt, ausgefahren etc.) werden. Zusätzlich oder alternativ kann es sich um strukturversteifende Einrichtungen der Fahrzeugstruktur handeln. So können beispielsweise die Dämpferkennlinien von in Gelenkbereichen des Fahrzeugs vorgesehenen Dämpfern versteift werden, um eine günstigere Krafteinleitung in die Struktur zu erzielen und das Entgleisungsrisiko zu reduzieren. Insbesondere kann hierbei eine Berücksichtigung des aktuellen Schwenkwinkels des jeweiligen Gelenks vorgesehen sein.

Zusätzlich oder alternativ kann die Reaktionseinheit auch eine vorbereitende Betätigung von Rettungseinrichtungen des Fahrzeugs, insbesondere einer Notbeleuchtung, auslösen.

Bei weiteren bevorzugten Varianten des erfindungsgemäßen Schienenfahrzeugs ist wenigstens eine Erfassungseinrichtung vorgesehen, die als Zustandsparameter des Fahrzeugs einen für das Auftreten einer Kollision des Fahrzeugs mit einem Hindernis repräsentativen Parameter erfasst. Dies kann auf beliebige geeignete Weise erfolgen. Bevorzugt erfasst die Erfassungseinrichtung als für das Auftreten der Kollision repräsentativen Parameter eine Beschleunigung eines Teils des Fahrzeugs und/oder eine Verformung eines Teils des Fahrzeugs.

Auch hier ist vorzugsweise wieder bei der Durchführung der Klassifizierung eine Verarbeitung eines von dem betreffenden Zustandsparameter abgeleiteten Parameters vorgesehen, welche insbesondere eine Aussage über die Schwere des Aufpralls, beispielsweise also die tatsächliche Stoßenergie, und damit eine zutreffende Gefahrenklassifikation ermöglicht. Demgemäß kann einen leichteren Aufprall anders reagiert werden als bei einem schweren Aufprall.

Auch hier kann die Reaktionseinheit wieder in beliebiger geeigneter Weise, insbesondere in Abhängigkeit von der aktuellen, eine Kollision mit dem Hindernis repräsentierenden Gefahrenklassifikation reagieren. Vorzugsweise kann auch hier wieder wie oben beschrieben eine Signaleinrichtung, insbesondere für die Passagiere, aktiviert werden. Zusätzlich oder alternativ kann eine automatische Benachrichtigung einer Leitstelle ausgelöst werden, wobei die Benachrichtigung vorzugsweise eine Information über die Position des Fahrzeugs und/oder die Schwere der Kollision umfasst. Weiterhin kann zusätzlich oder alternativ eine Betätigung von Rettungseinrichtungen des Fahrzeugs, insbesondere einer Notbeleuchtung und/oder einer Türentriegelung, ausgelöst werden.

Bei weiteren bevorzugten Varianten des erfindungsgemäßen Schienenfahrzeugs erfolgt die bereits oben erwähnte Überwachung der Betätigung des Sollwertgebers für den Fahr/Bremsbetrieb des Fahrzeugs, mithin also in der Regel der Betätigung des Fahrhebels durch den Fahrzeugführer. Vorzugsweise ist hierzu wenigstens eine Erfassungseinrichtung vorgesehen, die als Zustandsparameter einer Einrichtung des Fahrzeugs einen für die Betätigung des Sollwertgebers für den Fahr/Bremsbetrieb des Fahrzeugs repräsentativen Parameter erfasst. Die Gefahrenerkennungseinheit nimmt dann die Zuordnung der aktuellen Gefahrenklassifikation unter Verwendung des für die Betätigung des Sollwertgebers repräsentativen Parameters und einer hieraus abgeleiteten Größe vor. Die abgeleitete Größe repräsentiert dabei vorzugsweise eine zeitliche Änderung des für die Betätigung des Sollwertgebers repräsentativen Parameters. Mit anderen Worten kann hierdurch beispielsweise erfasst werden, ob der Fahrer bei einer Notbremsung eine schnelle und starke Betätigung des Fahrhebels vornimmt, um dann hierauf bereits frühzeitig entsprechend zu reagieren.

Auch hier kann die Reaktionseinheit in Abhängigkeit von der aktuellen Gefahrenklassfikation wieder auf beliebige geeignete Weise reagieren. So kann beispielsweise eine Betätigung der Bremsen des Fahrzeugs ausgelöst werden, wobei insbesondere die Stärke der Betätigung der Bremsen in Abhängigkeit von der aktuellen Gefahrenklassifikation erfolgt. Zusätzlich oder alternativ kann wiederum die oben beschriebene vorbereitende Betätigung von das Crashverhalten des Fahrzeugs beeinflussenden Einrichtungen ausgelöst werden, insbesondere können wiederum Einrichtungen zum Stoßenergieverzehr und/oder strukturversteifende Einrichtungen der Fahrzeugstruktur aktiviert werden. Weiterhin kann auch hier wiederum eine vorbereitende Betätigung von Rettungseinrichtungen des Fahrzeugs, insbesondere einer Notbeleuchtung, ausgelöst werden.

Bei weiteren bevorzugten Varianten des erfindungsgemäßen Schienenfahrzeugs erfolgt eine Überwachung der Brandgefahr im Fahrzeug. Vorzugsweise ist hierzu wenigstens eine Erfassungseinnchtung vorgesehen, die als Zustandsparameter des Fahrzeugs einen für die Brandgefahr im Fahrzeug repräsentativen Parameter erfasst. Die Gefahrenerkennungseinheit ist dann dazu ausgebildet, die Zuordnung der aktuellen Gefahrenktassifikation unter Verwendung des für die Brandgefahr im Fahrzeug repräsentativen Parameters vorzunehmen.

Auch hier kann wiederum eine beliebige geeignete Reaktionen in Abhängigkeit von der aktuellen, eine Brandgefahr im Fahrzeug repräsentierenden Gefahrenklassifikation erfolgen. Insbesondere kann eine Signaleinrichtung, insbesondere für die Passagiere, aktiviert werden. Ebenso kann eine Betätigung einer Brandbekämpfungseinrichtung des Fahrzeugs ausgelöst werden. Zusätzlich oder alternativ kann eine Betätigung von Rettungseinrichtungen des Fahrzeugs, insbesondere einer Notbeleuchtung und/oder einer Türentriegelung, ausgelöst werden. Schließlich kann eine automatische Benachrichtigung einer Leitstelle ausgelöst werden, wobei die Benachrichtigung insbesondere eine Information über die Position des Fahrzeugs umfassen kann.

Bei weiteren vorteilhaften Varianten des erfindungsgemäßen Schienenfahrzeugs ist eine Überwachung der Energieversorgung des Fahrzeugs vorgesehen. Bevorzugt ist hierzu wenigstens eine Erfassungseinrichtung vorgesehen, die als einen die Energieversorgung des Fahrzeugs charakterisierenden Zustandsparameter einen für eine Spannung an einem Stromabnehmer und/oder einen für die Position eines Stromabnehmers repräsentativen Parameter erfasst. Weiterhin ist wenigstens eine Erfassungseinrichtung vorgesehen, die einen die Position des Fahrzeugs charakterisierenden Zustandsparameter erfasst. Die Gefahrenerkennungseinheit ist dann dazu ausgebildet, die Zuordnung der aktuellen Gefahrenklassifikation unter Verwendung des für die Energieversorgung des Fahrzeugs repräsentativen Zustandsparameters und des die Position des Fahrzeugs charakterisierenden Zustandsparameters vorzunehmen. Hiermit ist dann die oben bereits beschriebene Gefahrenklassifikation in Abhängigkeit von der Stromversorgung und der Position möglich.

Auch hier kann dann wiederum eine geeignete Reaktion in Abhängigkeit von der aktuellen Gefahrenklassifikation erfolgen. So kann ein Umschalten der Energieversorgung auf eine bordeigene Energiequelle des Fahrzeugs ausgelöst werden, um beispielsweise ein schnelles Verlassen bzw. Passieren einer Gefahrenstelle zu ermöglichen und auch die übrigen Funktionen des Fahrzeugs zumindest im Rahmen eines Notbetriebs zu gewährleisten. Zusätzlich oder alternativ kann eine Signaleinrichtung, insbesondere für den Fahrer, aktiviert werden. Weiterhin kann vorgesehen sein, eine Betätigung von Noteinrichtungen und/oder Rettungseinrichtungen des Fahrzeugs, insbesondere einer Notbeleuchtung und/oder einer Türentriegelung, auszulösen. Schließlich kann wiederum eine automatische Benachrichtigung einer Leitstelle ausgelöst werden, wobei die Benachrichtigung insbesondere eine Information über die Position des Fahrzeugs umfasst.

Gemäß einem weiteren Aspekt der Erfindung betrifft diese ein Verfahren zur Steuerung eines Schienenfahrzeugs gemäß Anspruch 10, bei dem wenigstens ein aktueller Zustandsparameter des Fahrzeugs und/oder der Umgebung des Fahrzeugs erfasst wird und wenigstens ein Zustandsparameter des Fahrzeugs in Abhängigkeit von dem erfassten aktuellen Zustandsparameter beeinflusst wird, wobei vorgebbare Werte des erfassten Zustandsparameters eine unmittelbare Gefährdung der Sicherheit der Fahrgäste des Fahrzeugs repräsentieren. Erfindungsgemäß ist vorgesehen, dass dem aktuellen Zustand des Fahrzeugs unter Verwendung eines erfassten ersten Zustandsparameters und unter Verwendung einer aus dem ersten Zustandsparameter abgeleiteten Zustandsgröße und/oder wenigstens eines erfassten zweiten Zustandsparameters nach vorgebbaren Gefahrenklassifikationskriterien eine aktuelle Gefahrenklassifikation zugeordnet wird. In Abhängigkeit von der aktuellen Gefahrenklassifikation wird dann eine den wenigstens einen Zustandsparameter des Fahrzeugs beeinflussende Reaktion ausgelöst.

Mit diesem erfindungsgemäßen Verfahren lassen sich die oben beschriebenen Varianten und Vorteile in demselben Maße erzielen, sodass hier lediglich auf die obigen Ausführungen verwiesen wird.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt. Es zeigt:

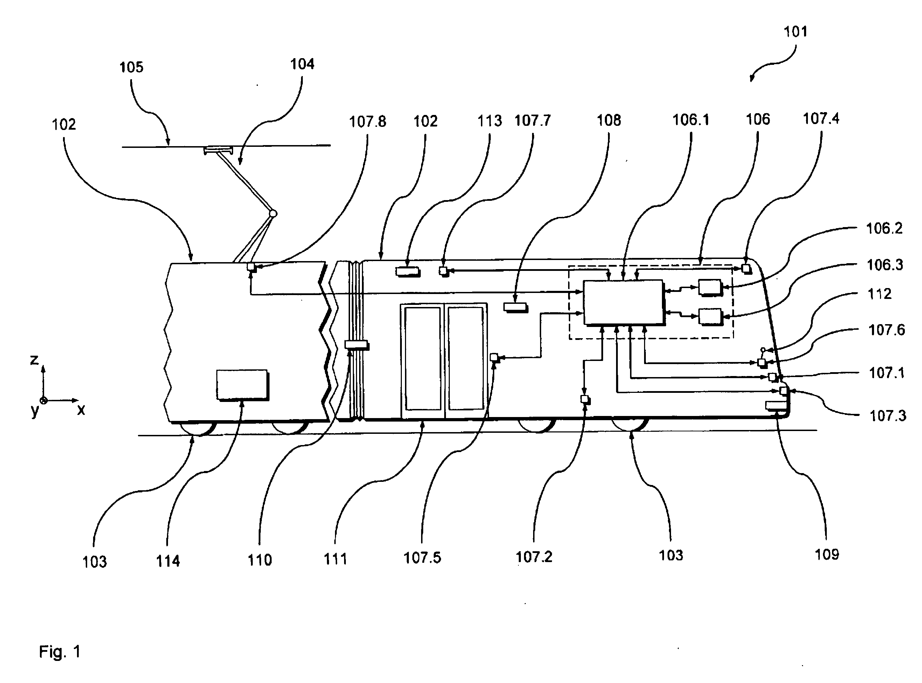

- Figur 1: eine schematische Seitenansicht eines Teils einer bevorzugten Ausführungsform des erfindungsgemäßen Schienenfahrzeugs.

Im Folgenden wird unter Bezugnahme auf die Figur 1 ein bevorzugtes Ausführungsbeispiel des erfindungsgemäßen Schienenfahrzeugs in Form eines leichten Schienenfahrzeugs 101 (z. B. einer Straßenbahn) beschrieben, mit dem ein bevorzugtes Ausführungsbeispiel des erfindungsgemäßen Verfahrens zur Steuerung eines Schienenfahrzeugs durchgeführt werden kann.

Zum einfacheren Verständnis der nachfolgenden Erläuterungen ist in den Figuren ein Koordinatensystem angegeben, in dem die x-Koordinate die Längsrichtung des Schienenfahrzeugs 101, die y-Koordinate die Querrichtung des Schienenfahrzeugs 101 und die z-Koordinate die Höhenrichtung des Schienenfahrzeugs 101 bezeichnen.

Die Figur 1 zeigt eine schematische Seitenansicht eines Teils des Fahrzeugs 101, welches mehrere Wagenkästen 102 aufweist, die auf Drehgestellen 103 abgestützt sind. Über einen Stromabnehmer 104 wird das Fahrzeug 101 aus einem Oberleitungsnetz 105 mit elektrischer Energie versorgt.

Das Fahrzeug 101 umfasst eine zentrale Fahrzeugsteuerung 106, welche zumindest die wesentlichen Funktionen zur Steuerung des Fahrzeugs 101 zur Verfügung stellt, indem die Fahrzeugsteuerung 106 eine Reihe von Zustandsparametern des Fahrzeugs 101 über entsprechende mit ihr verbundene Stelleinrichtungen beeinflusst. Zu diesen Stelleinrichtungen zählen beispielsweise die Stelleinrichtungen des Motors (nicht dargestellt), der Bremsen (nicht dargestellt), der Fahrwerke 103, der Kopplung der Wagenkästen 102 und anderer aktiver Komponenten des Fahrzeugs 101.

Die Fahrzeugsteuerung 106 ist mit einer Reihe von Erfassungseinrichtungen 107.1 bis 107.8 verbunden, welche, wie im Folgenden noch näher erläutert wird, eine Reihe von Zustandsparametern des Fahrzeugs 101 erfassen und entsprechende Zustandsignale an die Fahrzeugsteuerung 106 übermitteln. Für zumindest einen Teil dieser Zustandsparameter des Fahrzeugs gilt, dass der betreffende Zustandsparameter bei bestimmten Werten eine unmittelbare Gefährdung für die Sicherheit der Fahrgäste des Fahrzeugs 101 repräsentiert, mithin also einen drohenden oder bestehenden Zustand, der eine unmittelbare Auswirkung auf die Unversehrtheit eines Fahrgastes haben kann. Dies schließt unter anderem die Gefährdung ein, durch übermäßige äußere Krafteinwirkung, durch Feuer oder Hitze oder durch Kontakt mit gesundheitsgefährdenden Stoffen einer körperlichen Schaden zu erleiden.

Die Fahrzeugsteuerung 106 führt unter Verwendung der jeweiligen Zustandsignale der Erfassungseinrichtungen 107.1 bis 107.8 eine Klassifizierung durch, bei der dem aktuellen Zustand des Fahrzeugs 101 eine aktuelle Gefahrenklassifikation zugeordnet wird. Dies geschieht, indem eine zentrale Verarbeitungseinheit 106.1 der Fahrzeugsteuerung 106 bei der Verarbeitung der Zustandsignale der Erfassungseinrichtungen 107.1 bis 107.8 auf einen mit der zentralen Verarbeitungseinheit 106.1 verbundenen ersten Speicher 106.2 zugreift. In diesem ersten Speicher 106.2 ist ein entsprechendes erstes Softwaremodul zur Gefahrenerkennung abgelegt.

Bei den ersten Softwaremodul in dem Speicher 106.2 kann es sich beispielsweise um eine erste Datenbank oder dergleichen handeln, welche für die jeweiligen Zustandsparameter eine oder mehrere Kennlinien und/oder eine oder mehrere Kennfelder (beliebiger Dimensionalität) umfasst, anhand derer für den jeweils aktuellen Wert der unterschiedlichen Zustandsparameter ein oder mehrere aktuelle Gefahrenklassifikationen ermittelt werden können. Die Gefahrenklassifikation ist dabei so gestaltet, dass sie die Art und/oder den Grad der Gefährdung der Passagiere des Fahrzeugs 101 repräsentiert. Mit anderen Worten bildet die zentrale Verarbeitungseinheit 106.1 also zusammen mit dem ersten Softwaremodul aus dem ersten Speicher 106.2 eine Gefahrenerkennungseinheit, welche eine aktuelle Gefährdungssituation einordnet und bewertet.

Durch die hohe Anzahl von unterschiedlichen Erfassungseinrichtungen 107.1 bis 107.8 und damit unterschiedlichen Zustandsparametern, welche die Fahrzeugsteuerung 106 verarbeitet, können hochkomplexe Gefährdungssituationen zuverlässig erfasst und klassifiziert werden. Vorzugsweise erfasst zumindest ein Großteil der Erfassungseinrichtungen 107.1 bis 107.8 entsprechend gefährdungsrelevante Zustandgrößen, um so entsprechend komplexe Gefährdungssituationen bewerten zu können.

Unter Verwendung der aktuellen Gefahrenklassifikation ermittelt die Fahrzeugsteuerung 106 dann eine angemessene Reaktion auf die aktuelle Gefährdungssituation. Dabei versteht es sich, dass gegebenenfalls auch keine Reaktion erfolgen muss, sofern bei der aktuellen Gefährdungssituationen keine oder eine vorgegebene, akzeptabel geringe Gefährdung der Passagiere besteht.

Die Ermittlung der Reaktion auf die aktuelle Gefahrenklassifikation, welche die aktuelle Gefährdungssituation der Passagiere repräsentiert, erfolgt, indem die zentrale Verarbeitungseinheit 106.1 auf einen mit der zentralen Verarbeitungseinheit 106.1 verbundenen zweiten Speicher 106.3 zugreift. In diesem zweiten Speicher 106.3 ist ein entsprechendes zweites Softwaremodul zur Ermittlung einer angemessenen Reaktion auf die aktuelle Gefahrenklassifikation abgelegt.

Bei dem zweiten Softwaremodul in dem Speicher 106.2 kann es sich beispielsweise um eine zweite Datenbank oder dergleichen handeln, welche für die Gefahrenklassifikation eine oder mehrere Kennlinien und/oder eine oder mehrere Kennfelder (beliebiger Dimensionalität) umfasst, anhand derer für den jeweils aktuellen Wert der Gefahrenklassifikation eine entsprechende angemessene Reaktion ermittelt werden kann. Ist dies geschehen, wird die entsprechende Reaktion durch die Fahrzeugsteuerung 106 initiiert, indem die Fahrzeugsteuerung die entsprechende(n) Stelleinrichtung(en) der für diese Reaktion anzusteuernden aktiven Komponente(n) ansteuert.

Die Fahrzeugsteuerung 106 kann dazu ausgebildet sein, ausschließlichen Abhängigkeit von der aktuellen Gefahrenklassifikation eine entsprechende Reaktion auszulösen. Vorzugsweise erfasst die Fahrzeugsteuerung 106 jedoch eine zeitliche Änderung der aktuellen Gefahrenklassifikation und löst in Abhängigkeit von der zeitlichen Änderung der aktuellen Gefahrenklassifikation eine entsprechende Reaktion aus. Dies ist im Sinne eines vorzeitigen, präventiven Eingreifens bei einer sich schnell erhöhenden Gefährdung der Passagiere von Vorteil.

Mit der vorliegenden Erfindung kann also in vorteilhafter Weise durch rechtzeitigen Eingriff verhindert werden, dass Passagiere zu Schaden kommen. Selbst wenn in ungünstigen Situationen trotz des schnellen Eingriffs des Systems ein Schaden für die Passagiere nicht mehr abzuwenden ist, so kann dieser doch zumindest in einem Großteil der Fälle deutlich reduziert werden.

Mit anderen Worten bildet die zentrale Verarbeitungseinheit 106.1 also zusammen mit dem zweiten Softwaremodul aus dem zweiten Speicher 106.3 eine Reaktionseinheit, welche entsprechend der aktuellen Gefahrenklassifikation, also entsprechend der aktuellen Gefährdungssituation der Passagiere, eine vorgegebene, angemessene Reaktion ermittelt und auslöst.

Die Fahrzeugsteuerung 106 bildet somit zusammen mit dem Erfassungseinrichtungen 107.1 bis 107.8 ein integriertes, vernetztes System zur Gefahrenfrüherkennung und Unfallvermeidung bzw. Schadensminimierung, welches eine größtmögliche Sicherheit für die Passagiere des Fahrzeugs 101 gewährieistet.

Die Fahrzeugsteuerung 106 kann bei der Durchführung der Gefahrenklassifikation ausschließlich auf das jeweilige Zustandsignal zurückgreifen. Bevorzugt werden aber auch aus dem ersten Zustandsignal abgeleitete Zustandgrößen berücksichtigt, welche alleine oder in Kombination mit anderen erfassten oder abgeleiteten Größen eine Klassifikation der aktuellen Gefährdungssituation ermöglicht. Vorzugsweise handelt es sich bei der aus dem ersten Zustandssignal abgeleiteten Zustandsgröße um eine zeitliche Ableitung des ersten Zustandssignals.

So erfasst beispielsweise die erste Erfassungseinrichtung in Form eines Abstandsensors 107.1 (Radar, Ultraschall etc.) als den Zustand der Umgebung des Fahrzeugs 101 charakterisierenden Zustandsparameter den Abstand zu einem potentiellen Hindernis im Fahrweg des Fahrzeugs 101 und gegebenenfalls die Größe des Hindernisses bzw. dessen Konturdaten. Für die Durchführung der Gefahrenklassifikation verwendet die Fahrzeugsteuerung 106 dann auch die zeitliche Änderung des Abstands (mithin also die Annäherungsgeschwindigkeit an das Hindernis), um über eine geeignete Klassifizierung geeignete Gegenmaßnahmen einzuleiten. So können beispielsweise auch bei der großen Entfernung aber einer hohen Annäherungsgeschwindigkeit frühzeitig Maßnahmen zur Vermeidung einer Kollision unternommen werden.

Im einfachsten Fall erhält der Zugführer über eine entsprechende, mit der Fahrzeugsteuerung verbundene (nicht dargestellte) optische und/oder akustische Signaleinrichtung eine frühzeitige Kollisionswarnung. Hierbei kann natürlich je nach Gefährdungsgrad (beispielsweise über eine ansteigende Intensität des Signals) eine Abstufung der Warnwirkung der Kollisionswamung erfolgen.

Wird erfasst, dass der Zugführer nicht rechtzeitig reagiert, so kann die Fahrzeugsteuerung 106 selbst eingreifen. Ebenso kann vorgesehen sein, dass die Fahrzeugsteuerung unverzüglich, also von der Reaktion des Zugführers eingreift. Der Eingriff kann beispielsweise erfolgen, indem die Motorleistung des Fahrzeugs 101 gedrosselt wird und gegebenenfalls ein gezielter Bremseingriff an den Drehgestellen 103 initiiert wird, um eine Kollision mit dem Hindernis zu vermeiden oder zumindest die Aufprallenergie so weit wie möglich zu reduzieren.

Mit dieser Berücksichtigung der zeitlichen Ableitung des Abstands, also der Annäherungsgeschwindigkeit, ist es in einfacher Weise möglich, die zeitliche Entwicklung des Abstands zu berücksichtigen, um hieraus eine zutreffende Einschätzung über die weitere Entwicklung des Abstands zum Hindernis zu erhalten und somit eine vorausschauende, gegebenenfalls präventive Reaktion zu ermöglichen.

Unterstützend für die Einschätzung der Kollisionsgefahr wird über eine zweite Erfassungseinrichtung 107.2 im Bereich eines (nicht dargestellten) Antriebs eines der Drehgestelle 103 ein für die aktuelle Fahrgeschwindigkeit repräsentativer Zustandsparameter erfasst (beispielsweise die Drehzahl des Antriebsmotors oder der Radsatzwelle etc., aus der anhand bekannter Größen die aktuelle Fahrgeschwindigkeit bestimmt werden kann). Über die so ermittelte aktuelle Fahrgeschwindigkeit des Fahrzeugs 101 kann dann beispielsweise erfasst und berücksichtigt werden, ob sich ein erfasstes Hindernis selbst bewegt oder ob es sich um ein stehendes Hindernis handelt. Dies kann dann wieder bei der Ermittlung der angemessenen Reaktion berücksichtigt werden.

Über eine dritte Erfassungseinrichtung in Form eines Beschleunigungssensors 107.3 wird als weiterer Zustandsparameter zumindest die aktuelle Beschleunigung des Fahrzeugs 101 entlang der Fahrzeuglängsrichtung (x-Richtung) ermittelt. Hierüber kann zum einen bei der Gefahrenklassifikation die aktuelle Beschleunigung ermittelt werden, welche auf das Fahrzeug 101 und damit die Passagiere wirkt. Liegt diese Beschleunigung beim Bremsen zu Kollisionsvermeidung beispielsweise noch nicht im Bereich des im Hinblick auf die Belastung der Passagiere maximal zulässigen Werts, ist aber eine zusätzliche Bremswirkung erforderlich, um die Kollision zu vermeiden, so kann als angemessene Reaktion eine weitere Erhöhung der Bremswirkung erfolgen, um eine möglichst schnelle Reduktion des Risikos für die Passagiere zu erzielen. Ist dies nicht der Fall, ist also der maximal zulässige Wert bereits erreicht, sollte wenn möglich keine Erhöhung der Bremswirkung mehr vorgenommen werden.

Über eine vierte Erfassungseinrichtung in Form eines GPS-Moduls 107.4 wird als weiterer Zustandsparameter die Position des Fahrzeugs 101 erfasst. Die Berücksichtigung der Position des Fahrzeugs 101 ist für die Durchführung der Gefahrenklassifikation im Zusammenhang mit der Einschätzung des Kollisionsrisikos mit einem Hindernis von besonderem Vorteil, da sich hiermit die Durchführung der Klassifikation erheblich vereinfacht.

So ist aufgrund des für das Fahrzeug 101 fest vorgegebenen Fahrwegs und des auf diesem Fahrweg einzuhaltenden Lichtraums eine einfache Einordnung möglich, ob ein erfasster Gegenstand tatsächlich ein gefährliches Hindernis darstellt oder nicht. Hierbei muss lediglich erfasst werden, ob das potentielle Hindernis, dessen Abstand zum Fahrzeug 101 über den Abstandsensor 107.1 ermittelt wird, in den Lichtraum des vorgegebenen Fahrwegs hineinragt. Die Daten (beispielsweise die Koordinaten) des Lichtraums für die jeweilige Position des Hindernisses sind in der ersten Datenbank in dem ersten Speicher 106.2 abgelegt Die Koordinaten des Hindernisses können wiederum aus der Position des Fahrzeugs 101 auf der Fahrstrecke (ermittelt über das GPS-Modul 107.4) und dessen Abstand zum Fahrzeug 101 (ermittelt über den Abstandssensor 107.1) ermittelt werden. Übertappen die Koordinaten des Hindernisses und des Lichtraums, so stellt das Hindernis eine Gefahr für das Fahrzeug 101 und damit die Passagiere dar. Andernfalls handelt es sich um kein Hindernis, von dem ein Kollisionsrisiko ausgeht.

Es versteht sich hierbei, dass bei dieser Einschätzung anhand der Bewegung des Fahrzeugs 101 (ermittelt über den Geschwindigkeitssensor 107.3 und/oder das GPS-Modul 107.4) eine Berücksichtigung und Abschätzung einer eventuellen Bewegung des Hindernisses erfolgen kann, sodass in die Gefahrenklassifikation mit einfließt, ob sich das Hindernis möglicherweise in den Lichtraum hinein bewegen wird oder nicht.

Grundsätzlich kann bei einer entsprechend hoch eingestuften Kollisionsgefahr auf beliebige geeignete Weise reagiert werden. Vorzugsweise wird, wie erwähnt, in Abhängigkeit von der aktuellen, eine drohende Kollision mit dem Hindernis repräsentierenden Gefahrenklassifikation eine Signaleinrichtung aktiviert. Hierbei kann neben dem Zugführer auch den Passagieren oder anderen Verkehrsteilnehmern außerhalb des Fahrzeugs 101 eine drohende Kollision über geeignete (optische und/oder akustische) Mittel 108 signalisiert werden (Durchsage im Fahrzeug, Einschalten von Alarmglocken, Signalleuchten, Notbeleuchtung, Wamblinkanlage etc.). Ebenso kann automatisch eine entsprechende Benachrichtigung einer entfernten Leitstelle erfolgen.

Weiterhin kann die Fahrzeugsteuerung 106 bei entsprechend hoher Kollisionsgefahr präventiv eine vorbereitende Betätigung von das Crashverhalten des Fahrzeugs 101 beeinflussenden Einrichtungen auslösen. Hierzu zählen insbesondere Einrichtungen zum Stoßenergieverzehr 109 (so genannte Crashabsorber), die sofern erforderlich entsprechend aktiviert (z. B. ausgeklappt, ausgefahren etc.) werden. Zusätzlich oder alternativ kann es sich um strukturversteifende Einrichtungen der Fahrzeugstruktur handeln. So können beispielsweise die Dämpferkennlinien von in Gelenkbereichen zwischen den Wagenkästen 102 des Fahrzeugs 101 vorgesehenen Dämpfern 110 versteift werden, um eine günstigere Krafteinleitung in die Struktur des Fahrzeugs 101 erzielen und das Entgleisungsrisiko des Fahrzeugs 101 im Crashfall zu reduzieren. Insbesondere kann hierbei eine Berücksichtigung des aktuellen Schwenkwinkels des jeweiligen Gelenks vorgesehen sein, der dann wiederum über einen entsprechenden Sensor im Bereich des Gelenks als weiterer Zustandsparameter erfasst wird.

Eine weitere Gefährdungssituation, die bei dem Fahrzeug 101 bei der Durchführung der Gefahrenklassifikation berücksichtigt wird, ist der Verriegelungszustand der Türen 111 des Fahrzeugs 101, welcher jeweils über eine fünfte Erfassungseinrichtung in Form eines Türsensors 107.5 erfasst wird. Ein hierüber erfasstes Lösen der Türverriegelung bei hohen Fahrgeschwindigkeiten bzw. Beschleunigungen des Fahrzeugs 101 (erfasst über den Geschwindigkeitssensor 107.2 bzw. den Beschleunigungssensor 107.3) mit einer deutlich größeren Gefährdung für die Fahrgäste einher als im Stand des Fahrzeugs 101 oder bei geringen Geschwindigkeiten bzw. Beschleunigungen des Fahrzeugs 101

Die hiervon ausgehende Gefährdung kann dank der Verarbeitung dieser Zustandgrößen (Verriegelungszustand und Geschwindigkeit und/oder Beschleunigung) zutreffend klassifiziert werden und eine entsprechende Reaktion auslösen. So die Fahrzeugsteuerung 106 kann beispielsweise beim Lösen der Türverriegelung bei hohen Fahrgeschwindigkeiten des Fahrzeugs 101 eine schnelle Reduktion der Geschwindigkeit des Fahrzeugs 101, gegebenenfalls unter Ausgabe entsprechender Wamhinweise (Durchsage, Warnleuchten, Wamton im Bereich der Tür 111 etc.) an die Passagiere, initiieren, während bei geringen Fahrgeschwindigkeiten des Fahrzeugs 101 lediglich eine langsame Reduktion der Geschwindigkeit erfolgt, wobei die Wamhinweise dann gegebenenfalls entfallen können.

Über eine sechste Erfassungseinrichtung 107.6 wird der Zustand des von dem Fahrzeugführer betätigten Fahrhebels 112 erfasst, mit dem dieser die Geschwindigkeit des Fahrzeugs 101 einstellt. Die Fahrzeugsteuerung 106 nimmt die Zuordnung der aktuellen Gefahrenklassifikation im vorliegenden Beispiel unter Verwendung des für die Betätigung des Sollwertgebers repräsentativen Parameters und einer hieraus abgeleiteten Größe vor. Die abgeleitete Größe repräsentiert im vorliegenden Beispiel eine zeitliche Änderung des für die Betätigung des Sollwertgebers repräsentativen Parameters. Mit anderen Worten kann hierdurch beispielsweise erfasst werden, ob der Fahrer bei einer Notbremsung eine starke und schnelle Betätigung des Fahrhebels vornimmt, um dann hierauf bereits frühzeitig entsprechend zu reagieren.

Wird also beispielsweise eine abrupte, starke Änderung der Fahrhebelstellung erfasst, so kann durch die Fahrzeugsteuerung 106 wiederum in Abhängigkeit von weiteren Zustandgrößen, beispielsweise der aktuellen Geschwindigkeit bzw. Beschleunigung (erfasst über den Geschwindigkeitssensor 107.2 bzw. den Beschleunigungssensor 107.3), eine entsprechende Gefahrenklassifikation vorgenommen und eine angemessene Reaktion ausgelöst werden.

In diesem Fall kann der Bremseingriff beispielsweise in Abhängigkeit von der aktuellen Geschwindigkeit (erfasst über den Geschwindigkeitssensor 107.2) und/oder der Annäherungsgeschwindigkeit an ein Hindernis (erfasst über den Abstandssensor 107.1) gesteuert werden. Hierbei können wieder die im Hinblick auf die Unversehrtheit der Passagiere in die aktuellen Beschleunigungswerte (erfasst über den Beschleunigungssensor 107.3) und die maximal zulässigen Beschleunigungswerte (gespeichert in der ersten und/oder zweiten Datenbank) berücksichtigt werden. Auch hier kann natürlich wieder wie oben beschrieben eine entsprechende Signalausgabe an die Passagiere bzw. Verkehrsteilnehmer außerhalb des Fahrzeugs 101 sowie die Einleitung weiterer Maßnahmen (Einschalten der Notbeleuchtung etc.) erfolgen.

Zusätzlich kann die Fahrzeugsteuerung 106 auch hier wiederum die oben beschriebene vorbereitende Betätigung von das Crashverhalten des Fahrzeugs 101 beeinflussenden Einrichtungen auslösen, insbesondere können wiederum Einrichtungen zum Stoßenergieverzehr und/oder strukturversteifende Einrichtungen der Fahrzeugstruktur aktiviert werden.

Der Beschleunigungssensor 107.3 bzw. die hierüber erfasste Beschleunigung kann weiterhin dazu benutzt werden, das Auftreten einer Kollision des Fahrzeugs mit einem Hindernis zu erfassen. Aus diesem Grund ist der Beschleunigungssensor im Bereich der Fahrzeugverkleidung am vorderen Ende des Fahrzeugs 101 angeordnet.

Es versteht sich jedoch, dass bei anderen Varianten der Erfindung ein weiter vom kollisionsseitigen Fahrzeugende entfernter Referenzsensor vorgesehen sein kann, der eine Referenzbeschleunigung liefert, um eine Kollision zuverlässig zu erfassen. Ebenso kann zur Erfassung einer Kollision im Bereich der Fahrzeugverkleidung am vorderen Ende des Fahrzeugs auch ein Verformungssensor vorgesehen sein, welcher die Verformung in diesem Bereich und damit das Auftreten einer Kollision erfasst.

Auch im Zusammenhang mit der Erfassung und Verarbeitung einer Kollision ist bei der Durchführung der Gefahrenklassifikation wieder eine Verarbeitung eines von der Beschleunigung abgeleiteten Parameters vorgesehen, welcher insbesondere eine Aussage über die Schwere des Aufpralls, beispielsweise also die tatsächliche Stoßenergie, und damit eine zutreffende Gefahrenklassifikation ermöglicht. Demgemäß kann auf einen leichteren Aufprall anders reagiert werden als bei einem schweren Aufprall.

Auch hier kann die Fahrzeugsteuerung 106 wieder in beliebiger geeigneter Weise, insbesondere in Abhängigkeit von der aktuellen, eine Kollision mit dem Hindernis repräsentierenden Gefahrenklassifikation reagieren. Vorzugsweise kann auch hier wieder wie oben beschrieben eine entsprechende Signalisierung für Passagiere und Verkehrsteilnehmer außerhalb des Fahrzeugs 101 erfolgen. Zusätzlich kann eine automatische Benachrichtigung einer Leitstelle ausgelöst werden, wobei die Benachrichtigung dann bevorzugt eine Information über die Position des Fahrzeugs 101 (erfasst über das GPS-Modul 107.4) und/oder die Schwere der Kollision (erfasst über den Beschleunigungssensor 107.3) umfasst. Weiterhin kann die Fahrzeugsteuerung 106 automatisch eine Betätigung von Rettungseinrichtungen des Fahrzeugs 101 auslösen. Insbesondere kann eine Notbeleuchtung eingeschaltet werden und die Entriegelung der Türen 111 ausgelöst werden.

Als weiterer gefährdungsrelevanter Zustandsparameter wird bei dem Fahrzeug 101 die Brandgefahr im Fahrzeug 101 überwacht. Hierzu sind im Fahrzeug 101 verteilt mehrere siebte Erfassungseinrichtungen in Form von Rauch/Brandmeldern 107.7 vorgesehen. Die Fahrzeugsteuerung 106 nimmt demgemäß die Zuordnung der aktuellen Gefahrenklassifikation unter Verwendung des für die Brandgefahr im Fahrzeug repräsentativen Zustandsignal von dem jeweiligen Rauch/Brandmelder 107.7 vor.

Es versteht sich, dass im Zusammenhang mit der Einschätzung der Brandgefahr zusätzlich oder alternativ auch andere Zustandsparameter überwacht werden können. So kann beispielsweise über geeignete Sensoren erfasst werden, ob Brandbekämpfungseinrichtungen (Feuerlöscher, Löschdecken etc.) oder Hilfseinrichtungen bei Bränden (z. B. Brandhauben für den Fahrer) aus ihrer Halterung entnommen werden etc.

Im Zusammenhang mit der Brandgefahr im Fahrzeug 101 kann die Fahrzeugsteuerung 106 die Gefahrenklassifkation unter Berücksichtigung der aktuellen Position des Fahrzeugs 101 (erfasst über das GPS-Modul 107.4) durch. Hierdurch kann berücksichtigt werden, dass ein Brand bzw. Rauchentwicklung im Fahrzeug 101 an bestimmten Punkten des bekannten Fahrwegs, beispielsweise in einem Tunnel oder auf einer Brücke, eine größere Gefährdung darstellen als auf freier Strecke, auf der beispielsweise eine Evakuierung des Fahrzeugs 101 und ein Zugang zum Fahrzeug 101 für Rettungskräfte ohne Weiteres möglich ist bzw. sich eine lokale Gefahrensituation im Fahrzeug 101 erst nach längerer Zeit auf das gesamte Fahrzeug 101 auswirkt..

Auch hier kann die Fahrzeugsteuerung 106 wiederum eine beliebige geeignete Reaktion in Abhängigkeit von dem aktuellen Zustandsignal des jeweiligen Rauch/Brandmelders 107.7 ausführen. Insbesondere kann eine entsprechende Signalisierung für den Fahrzeugführer und die Passagiere aktiviert werden (Durchsage, Wamleuchten, Warnton etc.). Ebenso kann eine Betätigung einer Brandbekämpfungseinrichtung 113 (Sprinkleranlage etc.) des Fahrzeugs 101 ausgelöst werden.

Zusätzlich kann die Fahrzeugsteuerung 106 eine Betätigung von Rettungseinrichtungen des Fahrzeugs 101 auslösen. Insbesondere kann eine Notbeleuchtung eingeschaltet werden und es können die Türen 111 entriegelt werden. Schließlich kann eine automatische Benachrichtigung einer Leitstelle ausgelöst werden, wobei die Benachrichtigung eine Information über die Position des Fahrzeugs (erfasst durch das GPS-Modul 107.4) umfassen kann.

Ebenso kann die Fahrzeugsteuerung 106 in Abhängigkeit von der jeweiligen Gefahrenklassifikation eine Betätigung der Bremsen der Drehgestelle 103 vornehmen. Hierbei kann allerdings wiederum in Abhängigkeit von der aktuellen Position ( erfasst durch das GPS-Modul 107.4) und der sich daraus ergebenden Gefahrenklassifikation vorgesehen sein, dass zunächst eine die Gefährdung erhöhende Position (z. B. Tunnel, Brücke etc.) verlassen wird, bevor die Betätigung der Bremsen erfolgt.

Bei dem Fahrzeug 101 ist schließlich eine dem Stromabnehmer 104 zugeordnete achte Erfassungseinrichtung 107.8 vorgesehen, die einen den Zustand der Energieversorgung des Fahrzeugs 101 charakterisierenden Zustandsparameter erfasst. Dies ist insbesondere zusammen mit einer Erfassung der Position des Schienenfahrzeugs von besonderem Vorteil, da an bestimmten Punkten der Fahrstrecke (z. B. in einem Tunnel, auf einer Brücke etc.) ein Ausfall der Stromversorgung eine größere Gefährdung für die Fahrgäste darstellt als auf freier Strecke.

Die achte Erfassungseinrichtung 107.8 kann als Zustandsparameter einen für eine Spannung an dem Stromabnehmer 104 oder einen für die Position eines Stromabnehmers 104 (ausreichend weit angehoben oder nicht) repräsentativen Parameter erfassen. Die Fahrzeugsteuerung nimmt dann die Zuordnung der aktuellen Gefahrenklassifikation unter Verwendung des Energieversorgungszustands (erfasst über die achte Erfassungseinrichtung 107.8) und der Position des Fahrzeugs (erfasst über das GPS-Modul 107.4) vor.

Auch hier kann die Fahrzeugsteuerung 106 dann wiederum eine geeignete Reaktion in Abhängigkeit von der aktuellen Gefahrenklassifikation vornehmen. So kann ein Umschalten der Energieversorgung auf eine bordeigene Energiequelle 114 des Fahrzeugs 101 ausgelöst werden, um beispielsweise ein schnelles Verlassen bzw. Passieren einer Gefahrenstelle zu ermöglichen und auch die übrigen Funktionen des Fahrzeugs zumindest im Rahmen eines Notbetriebs zu gewährleisten. Zusätzlich kann oben hinlänglich beschriebene Signalisierung, insbesondere für den Fahrer, aktiviert werden. Weiterhin kann vorgesehen sein, eine Betätigung von Noteinrichtungen und/oder Rettungseinrichtungen des Fahrzeugs 101 (Notbeleuchtung, Türentriegelung etc.) auszulösen. Weiterhin können Kommunikationseinrichtungen zwischen dem Fahrer und den Passagieren (z. B. Notsprechstellen, Lautsprecher im Fahrgastraum etc.) aktiviert werden. Ebenso kann die externe Fahrzeugbeleuchtung (Warnblinkanlage, Begrenzungsleuchten, Abblendlicht etc.) aktiviert werden. Schließlich kann wiederum eine automatische Benachrichtigung einer Leitstelle ausgelöst werden, wobei die Benachrichtigung insbesondere eine Information über die Position des Fahrzeugs umfasst.

Die vorliegende Erfindung wurde vorstehend ausschließlich anhand eines Beispiels eines leichten Schienenfahrzeugs für den öffentlichen Personennahverkehr (ÖPNV) beschrieben, da sie dort aufgrund der hohen Verkehrsdichte (kurze Taktzeiten, hohes Aufkommen an anderen Verkehrsteilnehmern etc.) besonders vorteilhaft zum Einsatz kommen kann. Es versteht sich jedoch, dass die Erfindung aber auch im Zusammenhang mit beliebigen anderen Schienenfahrzeugen, insbesondere auch für den Hochgeschwindigkeitsverkehr eingesetzt werden kann.

## Patentansprüche

1. Schienenfahrzeug mit
- einer Fahrzeugsteuerung (106) und
- wenigstens einer mit der Fahrzeugsteuerung (106) verbundenen Erfassungseinrichtung (107.1 bis 107.8), wobei
- die Fahrzeugsteuerung (106) dazu ausgebildet ist, wenigstens einen Zustandsparameter des Fahrzeugs (101) zu beeinflussen,
- die wenigstens eine Erfassungseinrichtung (107.1 bis 107.8) dazu ausgebildet ist, einen aktuellen Zustandsparameter des Fahrzeugs (101) und/oder der Umgebung des Fahrzeugs (101) zu erfassen und ein entsprechendes Zustandssignal auszugeben, und
- vorgebbare Werte des erfassten Zustandsparameters eine unmittelbare Gefährdung der Sicherheit der Fahrgäste des Fahrzeugs (101) repräsentieren,
- die Fahrzeugsteuerung (106) eine Gefahrenerkennungseinheit aufweist, die dazu ausgebildet ist, dem aktuellen Zustand des Fahrzeugs (101)
- unter Verwendung eines ersten Zustandssignals der wenigstens einen Erfassungseinrichtung (107.1 bis 107.8) und
- unter Verwendung einer aus dem ersten Zustandssignal abgeleiteten Zustandsgröße und/oder wenigstens eines zweiten Zustandssignals wenigstens einer weiteren Erfassungseinrichtung (107.1 bis 107.8)
nach vorgebbaren Gefahrenklassifikationskriterien eine aktuelle Gefahrenklassifikation zuzuordnen, und
- die Fahrzeugsteuerung (106) eine Reaktionseinheit aufweist, die dazu ausgebildet ist, in Abhängigkeit von der aktuellen Gefahrenklassifikation eine den wenigstens einen Zustandsparameter des Fahrzeugs (101) beeinflussende Reaktion auszulösen.
**dadurch gekennzeichnet, dass**
- die Fahrzeugsteuerung (106) dazu ausgebildet ist, eine Historie wenigstens eines Zustandsparameters des Fahrzeugs (101) und/oder der Umgebung des Fahrzeugs (101) zu speichern, und
- die Gefahrenerkennungseinheit dazu ausgebildet ist, die Zuordnung der aktuellen Gefahrenklassifikation unter Verwendung der sich aus der Historie ergebenden zeitlichen Entwicklung des Zustandsparameters vorzunehmen.

2. Schienenfahrzeug nach Anspruch 1, **dadurch gekennzeichnet, dass**
- die aus dem ersten Zustandssignal abgeleiteten Zustandsgröße eine zeitliche Ableitung des ersten Zustandssignals ist
und/oder
- die Reaktionseinheit dazu ausgebildet ist, eine zeitliche Änderung der aktuellen Gefahrenklassifikation zu erfassen und in Abhängigkeit von der zeitlichen Änderung der aktuellen Gefahrenklassifikation eine den wenigstens einen Zustandsparameter des Fahrzeugs (101) beeinflussende Reaktion auszulösen.

3. Schienenfahrzeug nach einem der vorhergehenden Ansprüche, **dadurch gekennzeichnet, dass**
- wenigstens eine Erfassungseinrichtung (107.2, 107.3) vorgesehen ist, die einen die Bewegung zumindest eines Teils des Fahrzeugs (101), insbesondere die Geschwindigkeit und/oder die Beschleunigung zumindest eines Teils des Fahrzeugs (101), charakterisierenden Zustandsparameter erfasst,
und/oder
- wenigstens eine Erfassungseinrichtung (107.6, 107.7) vorgesehen ist, die einen den Zustand einer Einrichtung des Fahrzeugs (101), insbesondere den Zustand einer Stelleinrichtung (112) des Fahrzeugs (101), charakterisierenden Zustandsparameter erfasst,
und/oder
- wenigstens eine Erfassungseinrichtung (107.4) vorgesehen ist, die einen die Position des Fahrzeugs (101) charakterisierenden Zustandsparameter erfasst,
und/oder
- wenigstens eine Erfassungseinrichtung (107.1) vorgesehen ist, die einen den Zustand der Umgebung des Fahrzeugs (101), insbesondere den Zustand des Fahrwegs vor dem Fahrzeug (101) und dessen unmittelbarer Umgebung, charakterisierenden Zustandsparameter erfasst,
und/oder
- wenigstens eine Erfassungseinrichtung (107.8) vorgesehen ist, die einen den Zustand der Energieversorgung des Fahrzeugs (101) charakterisierenden Zustandsparameter erfasst.

4. Schienenfahrzeug nach einem der vorhergehenden Ansprüche, **dadurch gekennzeichnet, dass**
- wenigstens eine Erfassungseinrichtung (107.1) vorgesehen ist, die als Zustandsparameter für den Zustand der Umgebung des Fahrzeugs (101) einen für das Vorhandensein eines Hindernisses in Fahrtrichtung vor dem Fahrzeug repräsentativen Parameter erfasst, wobei die Erfassungseinrichtung (107.1) insbesondere als für das Vorhandensein eines Hindernisses repräsentativen Parameter eine Distanz des Fahrzeugs (101) zu einem Hindernis in Fahrtrichtung vor dem Fahrzeug (101) erfasst.
und/oder
- die Gefahrenerkennungseinheit insbesondere dazu ausgebildet ist, die Zuordnung der aktuellen Gefahrenklassifikation unter Verwendung des für das Vorhandensein eines Hindernisses repräsentativen Parameters und einer hieraus abgeleiteten Größe vorzunehmen, wobeidie abgeleitete Größe insbesondere eine zeitliche Änderung der Distanz zu dem Hindernis repräsentiert.
und/oder
- wenigstens eine Erfassungseinrichtung (107.4) vorgesehen ist, die einen die Position des Fahrzeugs (101) charakterisierenden Zustandsparameter erfasst, und die Gefahrenerkennungseinheit dazu ausgebildet ist, die Zuordnung der aktuellen Gefahrenklassifikation unter Verwendung des für das Vorhandensein des Hindernisses repräsentativen Parameters und des die Position des Fahrzeugs (101) charakterisierenden Zustandsparameters vorzunehmen.

5. Schienenfahrzeug nach Anspruch 4, **dadurch gekennzeichnet, dass** die Reaktionseinheit dazu ausgebildet ist, in Abhängigkeit von der aktuellen, eine drohende Kollision mit dem Hindernis repräsentierenden Gefahrenklassifikation
- eine Signaleinrichtung (108), insbesondere für den Fahrer, zu aktivieren,
und/oder
- eine Betätigung der Bremsen des Fahrzeugs (101) auszulösen, wobei insbesondere die Stärke der Betätigung der Bremsen in Abhängigkeit von der aktuellen Gefahrenklassifikation erfolgt,
und/oder
- eine vorbereitende Betätigung von das Crashverhalten des Fahrzeugs (101) beeinflussenden Einrichtungen (109, 110) auszulösen, insbesondere Einrichtungen zum Stoßenergieverzehr (109) zu aktivieren und/oder strukturversteifende Einrichtungen (110) der Fahrzeugstruktur zu aktivieren,
und/oder
- eine vorbereitende Betätigung von Rettungseinrichtungen des Fahrzeugs (101), insbesondere einer Notbeleuchtung, auszulösen.

6. Schienenfahrzeug nach einem der vorhergehenden Ansprüche, **dadurch gekennzeichnet, dass**
- wenigstens eine Erfassungseinrichtung (107.3) vorgesehen ist, die als Zustandsparameter des Fahrzeugs (101) einen für das Auftreten einer Kollision des Fahrzeugs (101) mit einem Hindernis repräsentativen Parameter erfasst, wobei
- die Erfassungseinrichtung (107.3) insbesondere als für das Auftreten der Kollision repräsentativen Parameter eine Beschleunigung eines Teils des Fahrzeugs (101) und/oder eine Verformung eines Teils des Fahrzeugs (101) erfasst.
und/oder
- die Reaktionseinheit insbesondere dazu ausgebildet ist, in Abhängigkeit von der aktuellen, eine Kollision mit dem Hindernis repräsentierenden Gefahrenklassifikation eine Signaleinrichtung (108), insbesondere für die Passagiere, zu aktivieren, und/oder eine automatische Benachrichtigung einer Leitstelle auszulösen, wobei die Benachrichtigung insbesondere eine Information über die Position des Fahrzeugs (101) und/oder die Schwere der Kollision umfasst, und/oder eine Betätigung von Rettungseinrichtungen des Fahrzeugs (101), insbesondere einer Notbeleuchtung und/oder einer Türentriegelung, auszulösen.

7. Schienenfahrzeug nach einem der vorhergehenden Ansprüche, **dadurch gekennzeichnet, dass**
- wenigstens eine Erfassungseinrichtung (107.6) vorgesehen ist, die als Zustandsparameter einer Einrichtung des Fahrzeugs (101) einen für die Betätigung des Sollwertgebers (112) für den Fahr/Bremsbetrieb des Fahrzeugs (101) repräsentativen Parameter erfasst, und
- die Gefahrenerkennungseinheit dazu ausgebildet ist, die Zuordnung der aktuellen Gefahrenklassifikation unter Verwendung des für die Betätigung des Sollwertgebers (112) repräsentativen Parameters und einer hieraus abgeleiteten Größe vorzunehmen, wobei
- die abgeleitete Größe insbesondere eine zeitliche Änderung des für die Betätigung des Sollwertgebers (112) repräsentativen Parameters repräsentiert
und/oder
- die Reaktionseinheit insbesondere dazu ausgebildet ist, in Abhängigkeit von der aktuellen Gefahrenklassifikation eine Betätigung der Bremsen des Fahrzeugs (101) auszulösen, wobei insbesondere die Stärke der Betätigung der Bremsen in Abhängigkeit von der aktuellen Gefahrenklassifikation erfolgt, und/oder eine vorbereitende Betätigung von das Crashverhalten des Fahrzeugs (101) beeinflussenden Einrichtungen (109, 110) auszulösen, insbesondere Einrichtungen zum Stoßenergieverzehr (109) zu aktivieren und/oder strukturversteifende Einrichtungen (110) der Fahrzeugstruktur zu aktivieren, und/oder eine vorbereitende Betätigung von Rettungseinrichtungen des Fahrzeugs (101), insbesondere einer Notbeleuchtung, auszulösen.

8. Schienenfahrzeug nach einem der vorhergehenden Ansprüche, **dadurch gekennzeichnet, dass**
- wenigstens eine Erfassungseinrichtung (107.7) vorgesehen ist, die als Zustandsparameter des Fahrzeugs (101) einen für die Brandgefahr im Fahrzeug (101) repräsentativen Parameter erfasst, und die Gefahrenerkennungseinheit dazu ausgebildet ist, die Zuordnung der aktuellen Gefahrenklassifikation unter Verwendung des für die Brandgefahr im Fahrzeug (101) repräsentativen Parameters vorzunehmen, wobei
- die Reaktionseinheit insbesondere dazu ausgebildet ist, in Abhängigkeit von der aktuellen, eine Brandgefahr im Fahrzeug (101) repräsentierenden Gefahrenklassifikation eine Signaleinrichtung (108), insbesondere für die Passagiere, zu aktivieren, und/oder eine Betätigung einer Brandbekämpfungseinrichtung (113) des Fahrzeugs (101) auszulösen, und/oder eine Betätigung von Rettungseinrichtungen des Fahrzeugs (101), insbesondere einer Notbeleuchtung und/oder einer Türentriegelung, auszulösen und/oder eine automatische Benachrichtigung einer Leitstelle auszulösen, wobei die Benachrichtigung insbesondere eine Information über die Position des Fahrzeugs (101) umfasst.

9. Schienenfahrzeug nach einem der vorhergehenden Ansprüche, **dadurch gekennzeichnet, dass**
- wenigstens eine Erfassungseinrichtung (107.8) vorgesehen ist, die als einen die Energieversorgung des Fahrzeugs (101) charakterisierenden Zustandsparameter einen für eine Spannung an einem Stromabnehmer (104) und/oder einen für die Position eines Stromabnehmers (104) repräsentativen Parameter erfasst,
- wenigstens eine Erfassungseinrichtung (107.4) vorgesehen ist, die einen die Position des Fahrzeugs (101) charakterisierenden Zustandsparameter erfasst, und
- die Gefahrenerkennungseinheit dazu ausgebildet ist, die Zuordnung der aktuellen Gefahrenklassifikation unter Verwendung des für die Energieversorgung des Fahrzeugs (101) repräsentativen Zustandsparameters und des die Position des Fahrzeugs (101) charakterisierenden Zustandsparameters vorzunehmen, wobei
- die Reaktionseinheit insbesondere dazu ausgebildet ist, in Abhängigkeit von der aktuellen Gefahrenklassifikation ein Umschalten der Energieversorgung auf eine bordeigene Energiequelle (114) des Fahrzeugs (101) auszulösen und/oder eine Signaleinrichtung (108), insbesondere für den Fahrer, zu aktivieren, und/oder eine Betätigung von Noteinrichtungen und/oder Rettungseinrichtungen des Fahrzeugs (101), insbesondere einer Notbeleuchtung und/oder einer Türentriegelung, auszulösen und/oder eine automatische Benachrichtigung einer Leitstelle auszulösen, wobei die Benachrichtigung insbesondere eine Information über die Position des Fahrzeugs (101) umfasst.

10. Verfahren zur Steuerung eines Schienenfahrzeugs, bei dem
- wenigstens ein aktueller Zustandsparameter des Fahrzeugs (101) und/oder der Umgebung des Fahrzeugs (101) erfasst wird und
- wenigstens ein Zustandsparameter des Fahrzeugs (101) in Abhängigkeit von dem erfassten aktuellen Zustandsparameter beeinflusst wird, wobei
- vorgebbare Werte des erfassten Zustandsparameters eine unmittelbare Gefährdung der Sicherheit der Fahrgäste des Fahrzeugs (101) repräsentieren,
- dem aktuellen Zustand des Fahrzeugs (101)
- unter Verwendung eines erfassten ersten Zustandsparameters und
- unter Verwendung einer aus dem ersten Zustandsparameter abgeleiteten Zustandsgröße und/oder wenigstens eines erfassten zweiten Zustandsparameters
nach vorgebbaren Gefahrenklassifikationskriterien eine aktuelle Gefahrenklassifikation zugeordnet wird und
- in Abhängigkeit von der aktuellen Gefahrenklassifikation eine den wenigstens einen Zustandsparameter des Fahrzeugs (101) beeinflussende Reaktion ausgelöst wird.
**dadurch gekennzeichnet, dass**
- eine Historie wenigstens eines Zustandsparameters des Fahrzeugs (101) und/oder der Umgebung des Fahrzeugs (101) gespeichert wird und
- die Zuordnung der aktuellen Gefahrenklassifikation unter Verwendung der sich aus der Historie ergebenden zeitlichen Entwicklung des Zustandsparameters vorgenommen wird.

11. Verfahren nach Anspruch 10, **dadurch gekennzeichnet, dass**
- die aus dem ersten Zustandsparameter abgeleitete Zustandsgröße eine zeitliche Ableitung des ersten Zustandsparameters ist
und/oder
- eine zeitliche Änderung der aktuellen Gefahrenklassifikation erfasst wird und in Abhängigkeit von der zeitlichen Änderung der aktuellen Gefahrenklassifikation eine den wenigstens einen Zustandsparameter des Fahrzeugs (101) beeinflussende Reaktion ausgelöst wird.

12. Verfahren nach einem der Ansprüche 10 oder 11, **dadurch gekennzeichnet, dass**
- ein die Bewegung zumindest eines Teils des Fahrzeugs (101), insbesondere die Geschwindigkeit und/oder die Beschleunigung zumindest eines Teils des Fahrzeugs (101), charakterisierender Zustandsparameter erfasst wird und/oder
- ein den Zustand einer Einrichtung des Fahrzeugs (101), insbesondere den Zustand einer Stelleinrichtung (112) des Fahrzeugs (101), charakterisierender Zustandsparameter erfasst wird
und/oder
- ein die Position des Fahrzeugs (101) charakterisierender Zustandsparameter erfasst wird
und/oder
- ein den Zustand der Umgebung des Fahrzeugs (101), insbesondere den Zustand des Fahrwegs vor dem Fahrzeug (101) und dessen unmittelbare Umgebung, charakterisierender Zustandsparameter erfasst wird
und/oder
- ein den Zustand der Energieversorgung des Fahrzeugs (101) charakterisierender Zustandsparameter erfasst wird.

13. Verfahren nach einem der Ansprüche 10 bis 12, **dadurch gekennzeichnet, dass**
- als Zustandsparameter für den Zustand der Umgebung des Fahrzeugs (101) ein für das Vorhandensein eines Hindernisses in Fahrtrichtung vor dem Fahrzeug (101) repräsentativer Parameter erfasst wird, wobei
- insbesondere als für das Vorhandensein eines Hindernisses repräsentativer Parameter eine Distanz des Fahrzeugs (101) zu einem Hindernis in Fahrtrichtung vor dem Fahrzeug (101) erfasst wird
und/oder
- die Zuordnung der aktuellen Gefahrenklassifikation insbesondere unter Verwendung des für das Vorhandensein eines Hindernisses repräsentativen Parameters und einer hieraus abgeleiteten Größe vorgenommen wird, wobei die abgeleitete Größe insbesondere eine zeitliche Änderung der Distanz zu dem Hindernis repräsentiert.
und/oder
- insbesondere ein die Position des Fahrzeugs (101) charakterisierender Zustandsparameter erfasst wird und die Zuordnung der aktuellen Gefahrenklassifikation unter Verwendung des für das Vorhandensein des Hindernisses repräsentativen Parameters und des die Position des Fahrzeugs (101) charakterisierenden Zustandsparameters vorgenommen wird.

14. Verfahren nach Anspruch 13, **dadurch gekennzeichnet, dass** in Abhängigkeit von der aktuellen, eine drohende Kollision mit dem Hindernis repräsentierenden Gefahrenklassifikation
- eine Signaleinrichtung (108), insbesondere für den Fahrer, aktiviert wird und/oder
- eine Betätigung der Bremsen des Fahrzeugs (101) ausgelöst wird, wobei insbesondere die Stärke der Betätigung der Bremsen in Abhängigkeit von der aktuellen Gefahrenklassifikation erfolgt,
und/oder
- eine vorbereitende Betätigung von das Crashverhalten des Fahrzeugs (101) beeinflussenden Einrichtungen ausgelöst wird, insbesondere Einrichtungen zum Stoßenergieverzehr (109) aktiviert werden und/oder strukturversteifende Einrichtungen (110) der Fahrzeugstruktur aktiviert werden,
und/oder
- eine vorbereitende Betätigung von Rettungseinrichtungen des Fahrzeugs (101), insbesondere einer Notbeleuchtung, ausgelöst wird.

15. Verfahren nach einem der Ansprüche 10 bis 14, **dadurch gekennzeichnet, dass**
- als Zustandsparameter des Fahrzeugs (101) ein für das Auftreten einer Kollision des Fahrzeugs (101) mit einem Hindernis repräsentativer Parameter erfasst wird, wobei
- insbesondere als für das Auftreten der Kollision repräsentativer Parameter eine Beschleunigung eines Teils des Fahrzeugs (101) und/oder eine Verformung eines Teils des Fahrzeugs (101) erfasst wird.
und/oder
- in Abhängigkeit von der aktuellen, eine Kollision mit dem Hindernis repräsentierenden Gefahrenklassifikation insbesondere eine Signaleinrichtung (108), insbesondere für die Passagiere, aktiviert wird und/oder eine automatische Benachrichtigung einer Leitstelle ausgelöst wird, wobei die Benachrichtigung insbesondere eine Information über die Position des Fahrzeugs (101) und/oder die Schwere der Kollision umfasst, und/oder eine Betätigung von Rettungseinrichtungen des Fahrzeugs (101), insbesondere einer Notbeleuchtung und/oder einer Türentriegelung, ausgelöst wird.

16. Verfahren nach einem der Ansprüche 10 bis 15, **dadurch gekennzeichnet, dass**
- als Zustandsparameter einer Einrichtung des Fahrzeugs (101) ein für die Betätigung eines Sollwertgebers (112) für den Fahr/Bremsbetrieb des Fahrzeugs (101) repräsentativer Parameter erfasst wird und
- die Zuordnung der aktuellen Gefahrenklassifikation unter Verwendung des für die Betätigung des Sollwertgebers (112) repräsentativen Parameters und einer hieraus abgeleiteten Größe vorgenommen wird, wobei
- die abgeleitete Größe insbesondere eine zeitliche Änderung des für die Betätigung des Sollwertgebers (112) repräsentativen Parameters repräsentiert und
- in Abhängigkeit von der aktuellen Gefahrenklassifikation insbesondere eine Betätigung der Bremsen des Fahrzeugs (101) ausgelöst wird, wobei insbesondere die Stärke der Betätigung der Bremsen in Abhängigkeit von der aktuellen Gefahrenklassifikation erfolgt, und/oder eine vorbereitende Betätigung von das Crashverhalten des Fahrzeugs (101) beeinflussenden Einrichtungen ausgelöst wird, insbesondere Einrichtungen zum Stoßenergieverzehr (109) aktiviert werden und/oder strukturversteifende Einrichtungen (110) der Fahrzeugstruktur aktiviert werden, und/oder eine vorbereitende Betätigung von Rettungseinrichtungen des Fahrzeugs (101), insbesondere einer Notbeleuchtung, ausgelöst wird.

17. Verfahren nach einem der Ansprüche 10 bis 16, **dadurch gekennzeichnet, dass**
- als Zustandsparameter des Fahrzeugs (101) ein für die Brandgefahr im Fahrzeug (101) repräsentativer Parameter erfasst wird und
- die Zuordnung der aktuellen Gefahrenklassifikation unter Verwendung des für die Brandgefahr im Fahrzeug (101) repräsentativen Parameters vorgenommen wird, wobei
- in Abhängigkeit von der aktuellen, eine Brandgefahr im Fahrzeug (101) repräsentierenden Gefahrenklassifikation insbesondere eine Signaleinrichtung (108), insbesondere für die Passagiere, aktiviert wird und/oder eine Betätigung einer Brandbekämpfungseinrichtung (113) des Fahrzeugs (101) ausgelöst wird und/oder eine Betätigung von Rettungseinrichtungen des Fahrzeugs (101), insbesondere einer Notbeleuchtung und/oder einer Türentriegelung, ausgelöst wird und/oder eine automatische Benachrichtigung einer Leitstelle ausgelöst wird, wobei die Benachrichtigung insbesondere eine Information über die Position des Fahrzeugs (101) umfasst.

18. Verfahren nach einem der Ansprüche 10 bis 17, **dadurch gekennzeichnet, dass**
- als ein die Energieversorgung des Fahrzeugs (101) charakterisierender Zustandsparameter ein für eine Spannung an einem Stromabnehmer (104) und/oder ein für die Position eines Stromabnehmers (104) repräsentativer Parameter erfasst wird,
- wenigstens ein die Position des Fahrzeugs (101) charakterisierender Zustandsparameter erfasst wird und
- die Zuordnung der aktuellen Gefahrenklassifikation unter Verwendung des für die Energieversorgung des Fahrzeugs (101) repräsentativen Zustandsparameters und des die Position des Fahrzeugs (101) charakterisierenden Zustandsparameters erfolgt, wobei
- in Abhängigkeit von der aktuellen Gefahrenklassifikation insbesondere ein Umschalten der Energieversorgung auf eine bordeigene Energiequelle (114) des Fahrzeugs (101) ausgelöst wird und/oder eine Signaleinrichtung, insbesondere für den Fahrer, aktiviert wird und/oder eine Betätigung von Noteinrichtungen und/oder Rettungseinrichtungen des Fahrzeugs (101), insbesondere einer Notbeleuchtung und/oder einer Türentriegelung, ausgelöst wird und/oder eine automatische Benachrichtigung einer Leitstelle ausgelöst wird, wobei die Benachrichtigung insbesondere eine Information über die Position des Fahrzeugs (101) umfasst.

## Claims

1. Rail vehicle with
- a vehicle control (106) and
- at least one detection device (107.1 to 107.8) connected to the vehicle control (106), wherein
- the vehicle control (106) is designed to influence at least one state parameter of the vehicle (101),
- the at least one detection device (107.1 to 107.8) is designed to detect a current state parameter of the vehicle and/or of the surroundings of the vehicle (101) and output a corresponding state signal, and
- pre-determinable values of the detected state parameter represent a direct threat to the safety of the passengers in the vehicle (101),
- the vehicle control (106) comprises a danger recognition unit that is designed to allocate,
- using a first state signal of the at least one detection device (107.1 to 107.8) and
- using a state magnitude derived from the first state signal and/or at least one second state signal of at least one further detection device (107.1. to 107.8),
a current danger classification to the current state of the vehicle (101) according to pre-determinable danger classification criteria, and
- the vehicle control (106) comprises a reaction unit that is designed to trigger, depending on the current danger classification, a reaction influencing the at least one state parameter of the vehicle (101),
**characterized in that**
- the vehicle control (106) is designed to store a history of at least one state parameter of the vehicle (101) and/or of the surroundings of the vehicle (101), and
- the danger recognition unit is designed to undertake the allocation of the current danger classification using the temporal development of the state parameter obtained from the history.

2. Rail vehicle according to claim 1, **characterised in that**
- the state magnitude derived from the first state signal is a temporal derivative of the first state signal
and/or
- the reaction unit is designed to detect a temporal change in the current danger classification and, depending on the temporal change in the current danger classification, to trigger a reaction influencing the at least one state parameter of the vehicle (101).

3. Rail vehicle according to one of the preceding claims, **characterized in that**
- at least one detection device (107.2, 107.3) is provided, which detects a state parameter characterizing the movement of at least one part of the vehicle (101), in particular the velocity and/or the acceleration of at least one part of the vehicle (101),
and/or
- at least one detection device (107.6, 107.7) is provided, which detects a state parameter characterizing the state of a device of the vehicle (101), in particular the state of an adjustment device (112) of the vehicle (101),
and/or
- at least one detection device (107.4) is provided, which detects a state parameter characterizing the position of the vehicle (101),
and/or
- at least one detection device (107.1) is provided, which detects a state parameter characterizing the state of the surroundings of the vehicle (101), in particular the state of the route in front of the vehicle (101) and its immediate surroundings,
and/or
- at least one detection device (107.8) is provided, which detects a state parameter characterizing the state of the power supply of the vehicle (101).

4. Rail vehicle according to one of the preceding claims, **characterized in that**
- at least one detection device (107.1) is provided, which detects, as state parameter of the state of the surroundings of the vehicle (101), a parameter representing the presence of an obstacle in the travel direction in front of the vehicle, wherein the detection device (107.1) detects in particular, as a parameter representing the presence of an obstacle, a distance of the vehicle (101) to an obstacle in the direction of travel in front of the vehicle
and/or
- the danger recognition unit is designed in particular to undertake the allocation of the current danger classification using the parameter representing the presence of an obstacle and a quantity derived therefrom, wherein the derived quantity represents in particular a temporal change of the distance to the obstacle,
and/or
- at least one detection device (107.4) is provided, which detects a state parameter characterizing the position of the vehicle (101), and the danger recognition unit is designed to undertake the allocation of the current danger classification using the parameter representing the presence of the obstacle and the state parameter characterizing the position of the vehicle (101).

5. Rail vehicle according to claim 4, **characterized in that** the reaction unit is designed to activate, depending on the current danger classification representing a threat of collision with the obstacle
- a signal device (108), in particular for the driver,
and/or
- to trigger an actuation of the brakes of the vehicle (101), wherein in particular the intensity of the actuation of the brakes takes place depending on the current danger classification,
and/or
- to trigger a preparatory actuation of devices (109, 110) influencing the crash behaviour of the vehicle (101), in particular to activate devices for dissipating the impact energy (109) and/or to activate structure-reinforcing devices (110) of the vehicle structure,
and/or
- to trigger a preparatory actuation of life-saving devices of the vehicle (101), in particular an emergency lighting.

6. Rail vehicle according to one of the preceding claims, **characterized in that**
- at least one detection device (107.3) is provided, which detects, as state parameter of the vehicle (101), a parameter representing the occurrence of a collision of the vehicle (101) with an obstacle, wherein
- the detection device (107.3) detects in particular as a parameter representing the occurrence of the collision, an acceleration of part of the vehicle (101) and/or a deformation of part of the vehicle (101),
and/or
- the reaction unit is designed in particular to trigger, depending on the current danger classification representing a collision with the obstacle, a signal device (108), in particular for the passengers, and/or to trigger an automatic notification of a control centre, wherein the notification includes in particular information on the position of the vehicle (101) and/or of the severity of the collision, and/or to trigger an actuation of life-saving devices of the vehicle (101), in particular emergency lighting and/or a door release unit.

7. Rail vehicle according to one of the preceding claims, **characterized in that**
- at least one detection device (107.6) is provided, which detects, as said state parameter of a device of the vehicle (101), a parameter representing the actuation of the set-point generator (112) for the driving/braking operation of the vehicle, and
- the danger recognition unit is designed to undertake the allocation of the current danger classification using the parameter representing the actuation of the set-point generator (112) and a quantity derived therefrom, wherein
- the derived quantity represents in particular a temporal change of the parameter representing the actuation of the set-point generator (112)
and/or
- the reaction unit is designed in particular to trigger, depending on the current danger classification, an actuation of the brakes of the vehicle (101), wherein in particular the magnitude of the actuation of the brakes takes place depending on the current danger classification, and/or to trigger a preparatory actuation of devices (109, 110) influencing the crash behaviour of the vehicle (101), in particular to activate devices for dissipating the impact energy (109) and/or to activate structure-reinforcing devices (110) of the vehicle structure, and/or to trigger a preparatory actuation of life-saving devices of the vehicle (101), in particular an emergency lighting.

8. Rail vehicle according to one of the preceding claims, **characterized in that**
- at least one detection device (107.7) is provided, which detects, as a state parameter of the vehicle (101), a parameter representing the danger of fire in the vehicle (101), and the danger recognition unit is designed to undertake the allocation of the current danger classification using the parameter representing the danger of fire in the vehicle (101), wherein
- the reaction unit is designed in particular to activate, depending on the current danger classification representing a danger of fire in the vehicle (101), a signal device (108), in particular for the passengers, and/or to trigger an actuation of a fire fighting device (113) of the vehicle (101) and/or to trigger an actuation of life-saving devices of the vehicle (101), in particular an emergency lighting and/or a door release unit, and/or to trigger an automatic notification of a control centre, wherein the notification includes in particular information on the position of the vehicle (101).

9. Rail vehicle according to one of the preceding claims, **characterized in that**
- at least one detection device (107.8) is provided, which detects, as state parameter characterizing the power supply of the vehicle (101), a parameter representing a voltage at a current collector (104) and/or a parameter representing the position of a current collector (104),
- at least one detection device (107.4) is provided, which detects a state parameter characterising the position of the vehicle (101), and
- the danger recognition unit is designed to undertake the allocation of the current danger classification using the state parameter representing the power supply of the vehicle (101) and using the state parameter characterising the position of the vehicle (101), wherein
- the reaction unit is designed in particular to trigger, depending on the current danger classification, a switching of the power supply to an on-board power source (114) of the vehicle (101) and/or to activate a signalling device (108), in particular for the driver, and/or to trigger an actuation of emergency devices and/or life-saving devices of the vehicle (101), in particular an emergency lighting and/or a door release facility, and/or to trigger an automatic notification of a control centre, wherein the notification includes in particular information on the position of the vehicle (101).

10. Method for controlling a rail vehicle, in which
- at least one current state parameter of the vehicle (101) and/or of the surroundings of the vehicle (101) is detected, and
- at least one state parameter of the vehicle (101) is influenced depending on the detected current state parameter, wherein
- pre-determinable values of the detected state parameter represent a direct threat to the safety of the passengers of the vehicle (101),
- according to pre-determinable danger classification criteria,
- using a detected first state parameter and
- using a state magnitude derived from the first state parameter and/or at least one detected second state parameter,
a current danger classification is allocated to the current state of the vehicle (101), and,
- depending on the current danger classification, a reaction influencing the at least one state parameter of the vehicle (101) is triggered,
**characterized in that**
- a history of at least one state parameter of the vehicle (101) and/or of the surroundings of the vehicle (101) is stored, and
- the allocation of the current danger classification is performed using the temporal development of the state parameter obtained from the history.

11. Method according to claim 10, **characterized in that**
- the state magnitude derived from the first state parameter is a temporal derivation of the first state parameter
and/or
- a temporal change of the current danger classification is detected and, depending on the temporal change of the current danger classification, a reaction influencing the at least one state parameter of the vehicle (101) is triggered.

12. Method according to one of claims 10 and 11, **characterized in that**
- a state parameter characterizing the movement of at least part of the vehicle (101), in particular the velocity and/or the acceleration of at least part of the vehicle (101), is detected
and/or
- a state parameter characterizing the state of a device of the vehicle (101), in particular the state of an adjustment device (112) of the vehicle (101), is detected
and/or
- a state parameter characterizing the position of the vehicle (101) is detected
and/or
- a state parameter characterizing the state of the surroundings of the vehicle (101), in particular the state of the route in front of the vehicle (101) and its immediate surroundings, is detected
and/or
- a state parameter characterizing the state of the power supply of the vehicle (101) is detected.

13. Method according to one of claims 10 to 12, **characterized in that**
- as state parameter of the state of the surroundings of the vehicle (101), a parameter representing the presence of an obstacle in the direction of travel in front of the vehicle (101) is detected, wherein
- a distance of the vehicle (101) to an obstacle in the direction of travel in front of the vehicle (101) is detected in particular as parameter representing the presence of an obstacle,
and/or
- the allocation of the current danger classification is carried out in particular using the parameter representing the presence of an obstacle and a quantity derived therefrom, wherein the derived quantity represents in particular a temporal change of the distance to the obstacle,
and/or
- in particular a state parameter characterizing the position of the vehicle (101) is detected and the allocation of the current danger classification is carried out using the parameter representing the presence of the obstacle and using the state parameter characterizing the position of the vehicle (101).

14. Method according to claim 13, **characterized in that**, depending on the current danger classification representing a threat of collision with the obstacle
- a signalling device (108), in particular for the driver, is activated
and/or
- an actuation of the brakes of the vehicle (101) is triggered, wherein in particular the intensity of the actuation of the brakes takes place depending on the current danger classification,
and/or
- a preparatory actuation of devices influencing the crash behaviour of the vehicle (101) is triggered, in particular devices for dissipating the impact energy (109) are activated and/or structure-reinforcing devices (110) of the vehicle structure are activated,
and/or
- a preparatory actuation of life-saving devices of the vehicle (101), in particular an emergency lighting, is triggered.

15. Method according to one of claims 10 to 14, **characterized in that**
- as state parameter of the vehicle (101), a parameter representing the occurrence of a collision of the vehicle (101) with an obstacle is detected, wherein
- in particular an acceleration of part of the vehicle (101) and/or a deformation of part of the vehicle (101) is detected as parameter representing the occurrence of the collision,
and/or
- depending on the current danger classification representing a collision with the obstacle, in particular a signalling device (108), in particular for the passengers, is activated and/or an automatic notification of a control centre is triggered, wherein the notification includes in particular information on the position of the vehicle (101) and/or the severity of the collision, and/or an actuation of life-saving devices of the vehicle (101), in particular an emergency lighting and/or a door release unit, is triggered.

16. Method according to one of claims 10 to 15, **characterized in that**
- as said state parameter of a device of the vehicle (101) a parameter representing the actuation of a set-point generator (112) for the driving/braking operation of the vehicle (101) is detected, and
- the allocation of the current danger classification is performed using the parameter representing the actuation of the set-point generator (112) and a quantity derived therefrom, wherein
- the derived quantity represents in particular a temporal change of the parameter representing the actuation of the set-point generator (112) and
- depending on the current danger classification, in particular an actuation of the brakes of the vehicle (101) is triggered, wherein in particular the intensity of the actuation of the brakes takes place depending on the current danger classification, and/or a preparatory actuation of devices influencing the crash behaviour of the vehicle (101) is triggered, in particular devices for dissipating the impact energy (109) are activated and/or structure-reinforcing devices (110) of the vehicle structure are activated, and/or a preparatory actuation of life-saving devices of the vehicle (101), in particular an emergency lighting, is triggered.

17. Method according to one of claims 10 to 16, **characterized in that**
- as a state parameter of the vehicle (101), a parameter representing the danger of fire in the vehicle (101) is detected, and
- the allocation of the current danger classification is performed using the parameter representing the danger of fire in the vehicle (101), wherein
- depending on the current danger classification representing a danger of fire in the vehicle (101), in particular a signalling device (108), in particular for the passengers, is activated and/or an actuation of a fire fighting device (113) of the vehicle (101) is triggered and/or an actuation of life-saving devices of the vehicle (101), in particular an emergency lighting and/or a door release unit, is triggered and/or an automatic notification of a control centre is triggered, wherein the notification includes in particular information on the position of the vehicle (101).

18. Method according to one of claims 10 to 17, **characterized in that**
- as a state parameter characterising the power supply of the vehicle (101), a parameter representing a voltage at a current collector (104) and/or a parameter representing the position of a current collector (104) is detected
- at least one state parameter characterising the position of the vehicle (101) is detected, and
- the allocation of the current danger classification is performed using the state parameter representing the power supply of the vehicle (101) and the state parameter characterising the position of the vehicle (101), wherein
- depending on the current danger classification, in particular a switching of the power supply to an on-board energy source (114) of the vehicle (101) is triggered and/or a signalling device, in particular for the driver, is activated and/or an actuation of emergency devices and/or life-saving devices of the vehicle (101), in particular an emergency lighting and/or a door release unit, is triggered, and/or an automatic notification of a control centre is triggered, wherein the notification includes in particular information on the position of the vehicle (101).

## Revendications

1. Véhicule ferroviaire avec
- une commande de véhicule (106) et
- au moins un dispositif de détection (107.1 à 107.8) relié à la commande de véhicule (106), dans lequel
- la commande de véhicule (106) est conçue pour influencer au moins un paramètre d'état du véhicule (101),
- l'au moins un dispositif de détection (107.1 à 107.8) est conçu pour détecter un paramètre d'état actuel du véhicule (101) et/ou de l'environnement du véhicule (101) et pour délivrer un signal d'état correspondant; et
- des valeurs prédéterminables du paramètre d'état détecté représentent une mise en danger immédiate de la sécurité des passagers du véhicule (101),
- la commande de véhicule (106) présente une unité d'identification du danger qui est conçue pour associer à l'état actuel du véhicule (101),
- en utilisant un premier signal d'état de l'au moins un dispositif de détection (107.1 à 107.8) et
- en utilisant une grandeur d'état dérivée du premier signal d'état, et/ou en utilisant au moins un deuxième signal d'état d'au moins un autre dispositif de détection (107.1 à 107.8),
une classification actuelle du danger selon des critères prédéterminables de classification du danger, et
- la commande de véhicule (106) présente une unité de réaction qui est conçue pour déclencher, en fonction de la classification actuelle du danger, une réaction influençant l'au moins un paramètre d'état du véhicule (101).
**caractérisé en ce que**
- la commande de véhicule (106) est conçue pour enregistrer une historique d'au moins un paramètre d'état du véhicule (101) et/ou de l'environnement du véhicule (101), et
- l'unité d'identification du danger est conçue pour procéder à l'association de la classification actuelle du danger en utilisant l'évolution temporelle du paramètre d'état résultante de l'historique.

2. Véhicule ferroviaire selon la revendication 1, **caractérisé en ce que**
- la grandeur d'état dérivée du premier signal d'état est une dérivée temporelle du premier signal d'état
et/ou
- l'unité de réaction est conçue pour détecter une modification temporelle de la classification actuelle du danger et pour déclencher, en fonction de ladite modification temporelle, une réaction influençant l'au moins un paramètre d'état du véhicule (101).

3. Véhicule ferroviaire selon l'une des revendications précédentes, **caractérisé en ce que**
- il est prévu au moins un dispositif de détection (107.2, 107.3) qui détecte un paramètre d'état caractérisant le mouvement d'au moins une partie du véhicule (101), en particulier la vitesse et/ou l'accélération d'au moins une partie du véhicule (101),
et/ou
- il est prévu au moins un dispositif de détection (107.6, 107.7) qui détecte un paramètre d'état caractérisant l'état d'un dispositif du véhicule (101), en particulier l'état d'une commande d'actionnement (112) du véhicule (101),
et/ou
- il est prévu au moins un dispositif de détection (107.4) qui détecte un paramètre d'état caractérisant la position du véhicule (101),
et/ou
- il est prévu au moins un dispositif de détection (107.1) qui détecte un paramètre d'état caractérisant l'état de l'environnement du véhicule (101), en particulier l'état de la voie devant le véhicule (101) et de son environnement immédiat,
et/ou
- il est prévu au moins un dispositif de détection (107.8) qui détecte un paramètre d'état caractérisant l'état de l'approvisionnement en énergie du véhicule.

4. Véhicule ferroviaire selon l'une des revendications précédentes, **caractérisé en ce que**
- il est prévu au moins un dispositif de détection (107.1) qui détecte, en tant que paramètre d'état pour l'état de l'environnement du véhicule (101), un paramètre représentatif de la présence d'un obstacle devant le véhicule dans la direction de circulation, le dispositif de détection (107.1) détectant en particulier, en tant que paramètre représentatif de la présence d'un obstacle, une distance entre le véhicule (101) et un obstacle devant le véhicule (101) dans la direction de circulation,
et/ou
- l'unité d'identification du danger est conçue en particulier pour procéder à l'association de la classification actuelle du danger en utilisant le paramètre représentatif de la présence d'un obstacle et une grandeur qui en est dérivée, la grandeur dérivée représentant en particulier une modification temporelle de la distance par rapport à l'obstacle.
et/ou
- il est prévu au moins un dispositif de détection (107.4) qui détecte un paramètre d'état caractérisant la position du véhicule (101), et l'unité d'identification du danger est conçue pour procéder à l'association de la classification actuelle du danger en utilisant le paramètre représentatif de la présence de l'obstacle et le paramètre d'état caractérisant la position du véhicule (101).

5. Véhicule ferroviaire selon la revendication 4, **caractérisé en ce que** l'unité de réaction est conçue pour, en fonction de la classification actuelle du danger représentant une collision imminente avec l'obstacle,
- activer un dispositif de signalisation (108), en particulier pour le conducteur
et/ou
- déclencher l'actionnement des freins du véhicule (101), la force dudit actionnement dépendant en particulier de la classification actuelle du danger,
et/ou
- déclencher l'actionnement préparatoire des dispositifs influençant le comportement du véhicule (101) en cas de collision (109, 110), en particulier, activer des dispositifs d'absorption de l'énergie de l'impact (109) et/ou des dispositifs de renforcement (110) de la structure du véhicule,
et/ou
- déclencher l'actionnement préparatoire de dispositifs de secours du véhicule (101), en particulier un éclairage de sécurité.

6. Véhicule ferroviaire selon l'une des revendications précédentes, **caractérisé en ce que**
- il est prévu au moins un dispositif de détection (107.3) qui détecte, en tant que paramètre d'état du véhicule (101), un paramètre représentatif de la survenue d'une collision du véhicule (101) avec un obstacle,
- le dispositif de détection (107.3) détectant en particulier, en tant que paramètre représentatif de la survenue d'une collision, l'accélération d'une partie du véhicule (101) et/ou une déformation d'une partie du véhicule (101),
et/ou
- l'unité de réaction est conçue en particulier pour activer, en fonction de la classification actuelle du danger représentant une collision avec l'obstacle, un dispositif de signalisation (108), en particulier pour les passagers, et/ou pour déclencher un avertissement automatique d'un poste de commande centralisé, ledit avertissement comprenant en particulier une information sur la position du véhicule (101) et/ou la gravité de la collision, et/ou pour déclencher l'actionnement de dispositifs de secours du véhicule (101), en particulier un éclairage de sécurité et/ou un déverrouillage des portes.

7. Véhicule ferroviaire selon l'une des revendications précédentes, **caractérisé en ce que**
- il est prévu au moins un dispositif de détection (107.6) qui détecte, en tant que paramètre d'état d'un dispositif du véhicule (101), un paramètre représentatif de l'actionnement d'un donneur de valeurs de référence (112) pour le mode de conduite/freinage du véhicule (101), et
- l'unité d'identification du danger est conçue en particulier pour procéder à l'association de la classification actuelle du danger en utilisant le paramètre représentatif de l'actionnement du donneur de valeurs de référence (112) et une grandeur qui en est dérivée,
- la grandeur dérivée représentant en particulier une modification temporelle du paramètre représentatif de l'actionnement de l'indicateur de valeurs de référence (112)
et/ou
- l'unité de réaction est conçue en particulier pour déclencher, en fonction de la classification actuelle du danger, l'actionnement des freins du véhicule (101), la force dudit actionnement des freins en particulier dépendant de la classification actuelle du danger, et/ou pour déclencher l'actionnement préparatoire des dispositifs (109, 110) agissant sur le comportement du véhicule (101) en cas de collision, en particulier, pour activer les dispositifs d'absorption de l'énergie issue de l'impact (109) et/ou les dispositifs de renforcement (110) de la structure du véhicule, et/ou pour déclencher l'actionnement préparatoire des dispositifs de secours du véhicule (101), en particulier un éclairage de sécurité.

8. Véhicule ferroviaire selon l'une des revendications précédentes, **caractérisé en ce que**
- il est prévu au moins un dispositif de détection (107.7) qui détecte, en tant que paramètre d'état du véhicule (101), un paramètre représentatif d'un risque d'incendie dans le véhicule (101), et l'unité d'identification du danger est conçue pour procéder à l'association de la classification actuelle du danger en utilisant le paramètre représentatif du risque d'incendie dans le véhicule (101),
- l'unité de réaction étant conçue pour activer, en fonction de la classification actuelle du danger représentant un risque d'incendie dans le véhicule (101), un dispositif de signalisation (108), en particulier pour les passagers, et/ou pour déclencher l'actionnement d'un dispositif de lutte contre l'incendie (113) du véhicule (101), et/ou pour déclencher l'actionnement de dispositifs de secours du véhicule (101), en particulier un éclairage de sécurité et/ou un déverrouillage des portes, et/ou un avertissement automatique d'un poste de commande centralisé, ledit avertissement comprenant en particulier une information sur la position du véhicule (101).

9. Véhicule ferroviaire selon l'une des revendications précédentes, **caractérisé en ce que**
- il est prévu au moins un dispositif de détection (107.8) qui détecte, en tant que paramètre d'état caractérisant l'approvisionnement en énergie du véhicule (101), un paramètre représentatif d'une tension sur un pantographe (104) et/ou un paramètre représentatif de la position d'un pantographe (104),
- il est prévu au moins un dispositif de détection (107.4) qui détecte un paramètre d'état caractérisant la position du véhicule (101), et
- l'unité d'identification du danger est conçue pour procéder à l'association de la classification actuelle du danger en utilisant le paramètre d'état représentatif de l'approvisionnement en énergie du véhicule (101) et celui de la position du véhicule (101),
- l'unité de réaction étant conçue en particulier pour déclencher, en fonction de la classification actuelle du danger, la commutation de l'approvisionnement en énergie sur une source d'énergie embarquée (114) du véhicule (101) et/ou pour activer un dispositif de signalisation (108), en particulier pour le conducteur, et/ou pour déclencher l'actionnement de dispositifs d'urgence ou et/ou de secours du véhicule (101), en particulier un éclairage de sécurité et/ou un déverrouillage des portes, et/ou pour déclencher un avertissement automatique d'un poste de commande centralisé, ledit avertissement comprenant en particulier une information sur la position du véhicule (101).

10. Procédé de commande d'un véhicule ferroviaire, dans lequel
- au moins un paramètre d'état actuel du véhicule (101) et/ou de l'environnement du véhicule (101) est détecté, et
- au moins un paramètre d'état actuel du véhicule (101) est influencé en fonction du paramètre d'état actuel détecté,
- des valeurs prédéterminables du paramètre d'état détecté représentant une mise en danger immédiate de la sécurité des passagers du véhicule (101),
- une classification actuelle de danger étant associée à l'état actuel du véhicule (101)
- en utilisant un premier paramètre d'état détecté et
- en utilisant une grandeur d'état dérivée du premier paramètre d'état et/ou au moins un deuxième paramètre d'état détecté
selon des critères de classification du danger prédéterminés et,
- en fonction de la classification actuelle du danger, une réaction agissant sur l'au moins un paramètre d'état du véhicule (101) étant déclenchée.
**caractérisé en ce que**
- une historique d'au moins un paramètre d'état du véhicule (101) et/ou de l'environnement du véhicule (101) est enregistré et
- il est procédé à l'association de la classification actuelle du danger en utilisant l'évolution temporelle du paramètre d'état résultante de l'historique.

11. Procédé selon la revendication 10, **caractérisé en ce que**
- la grandeur d'état dérivée du premier paramètre d'état est une dérivée temporelle dudit premier paramètre d'état
et/ou
- une modification temporelle de la classification actuelle du danger est détectée et, en fonction de ladite modification temporelle, une réaction influençant l'au moins un paramètre d'état du véhicule (101) est déclenchée.

12. Procédé selon l'une des revendications 10 ou 11, **caractérisé en ce que**
- un paramètre d'état caractérisant le mouvement d'au moins une partie du véhicule (101), en particulier la vitesse et/ou l'accélération d'au moins une partie du véhicule (101), est détecté,
et/ou
- un paramètre d'état caractérisant l'état d'un dispositif du véhicule (101), en particulier l'état d'une commande d'actionnement (112) du véhicule (101), est détecté
et/ou
- un paramètre d'état caractérisant la position du véhicule (101) est détecté
et/ou
- un paramètre d'état caractérisant l'état de l'environnement du véhicule (101), en particulier l'état de la voie devant le véhicule (101) et de son environnement immédiat, est détecté
et/ou
- un paramètre d'état caractérisant l'état de l'approvisionnement en énergie du véhicule (101) est détecté.

13. Procédé selon l'une des revendications 10 à 12, **caractérisé en ce que**
- en tant que paramètre d'état pour l'état de l'environnement du véhicule (101), un paramètre représentatif de la présence d'un obstacle devant le véhicule (101) dans la direction de circulation est détecté,
- en particulier, en tant que paramètre représentatif de la présence d'un obstacle, une distance entre le véhicule (101) et l'obstacle devant le véhicule (101) dans la direction de circulation étant détectée
et/ou
- l'association de la classification actuelle du danger étant produite en particulier en utilisant le paramètre représentatif de la présence d'un obstacle et une grandeur qui en est dérivée, la grandeur dérivée représentant en particulier une modification temporelle de la distance par rapport à l'obstacle.
et/ou
- en particulier, un paramètre d'état caractérisant la position du véhicule (101) étant détecté et l'association de la classification actuelle du danger étant produite en utilisant le paramètre représentatif de la présence d'un obstacle et le paramètre d'état caractérisant la position du véhicule (101).

14. Procédé selon la revendication 13, **caractérisé en ce que**, en fonction de la classification actuelle du danger représentant une collision imminente avec l'obstacle,
- un dispositif de signalisation (108), en particulier pour le conducteur, est activé et/ou
- l'actionnement des freins du véhicule (101) est déclenché, la force dudit actionnement dépendant en particulier de la classification actuelle du danger,
et/ou
- un actionnement préparatoire des dispositifs influençant le comportement du véhicule (101) en cas de collision est déclenché, en particulier, des dispositifs d'absorption de l'énergie de l'impact (109) et/ou des dispositifs de renforcement (110) de la structure du véhicule sont activés,
et/ou
- l'actionnement préparatoire de dispositifs de secours du véhicule (101) est déclenché, en particulier un éclairage de sécurité.

15. Procédé selon l'une des revendications 10 à 14, caractérisé ce que
- en tant que paramètre d'état du véhicule (101) un paramètre représentatif de la survenue d'une collision du véhicule (101) avec un obstacle est détecté,
- en tant que paramètre représentatif de la survenue d'une collision, en particulier, l'accélération d'une partie du véhicule (101) et/ou une déformation d'une partie du véhicule (101) étant détectées,
et/ou
- en fonction de la classification actuelle du danger représentant une collision avec l'obstacle, un dispositif de signalisation (108), en particulier pour les passagers, étant activé et/ou un avertissement automatique d'un poste de commande centralisé étant déclenché, ledit avertissement comprenant en particulier une information sur la position du véhicule (101) et/ou la gravité de la collision, et/ou l'actionnement de dispositifs de secours du véhicule (101) étant déclenché, en particulier un éclairage de sécurité et/ou un déverrouillage des portes.

16. Procédé selon l'une des revendications 10 à 15, **caractérisé en ce que**
- en tant que paramètre d'état d'un dispositif du véhicule (101), un paramètre représentatif de l'actionnement d'un donneur de valeurs de référence (112) pour le mode de conduite/freinage du véhicule (101) est détecté, et
- il est procédé à l'association de la classification actuelle du danger en utilisant le paramètre représentatif de l'actionnement du donneur de valeurs de référence (112) et une grandeur qui en est dérivée,
- la grandeur dérivée représentant en particulier une modification temporelle du paramètre représentatif de l'actionnement de l'indicateur de valeurs de référence (112), et
- en fonction de la classification actuelle du danger, en particulier, l'actionnement des freins du véhicule (101) étant déclenché, la force dudit actionnement des freins en particulier dépendant de la classification actuelle du danger, et/ou l'actionnement préparatoire des dispositifs agissant sur le comportement du véhicule (101) en cas de collision étant déclenché, en particulier, des dispositifs d'absorption de l'énergie de l'impact (109) et/ou des dispositifs de renforcement (110) de la structure du véhicule étant activés, et/ou un actionnement préparatoire des dispositifs de secours du véhicule (101), en particulier un éclairage de sécurité, étant déclenché.

17. Procédé selon l'une des revendications 10 à 16, **caractérisé en ce que**
- en tant que paramètre d'état du véhicule (101), un paramètre représentatif d'un risque d'incendie dans le véhicule (101) est détecté, et
- il est procédé à l'association de la classification actuelle du danger en utilisant le paramètre représentatif du risque d'incendie dans le véhicule (101),
- en fonction de la classification actuelle du danger représentant un risque d'incendie dans le véhicule (101), un dispositif de signalisation (108) étant activé, en particulier pour les passagers, et/ou l'actionnement d'un dispositif de lutte contre l'incendie (113) du véhicule (101) étant déclenché, et/ou l'actionnement de dispositifs de secours du véhicule (101), en particulier un éclairage de sécurité et/ou un déverrouillage des portes, étant déclenché, et/ou un avertissement automatique d'un poste de commande centralisé étant déclenché, ledit avertissement comprenant en particulier une information sur la position du véhicule (101).

18. Procédé selon l'une des revendications 10 à 17, **caractérisé en ce que**
- en tant que paramètre d'état caractérisant l'approvisionnement du véhicule (101), un paramètre représentatif d'une tension sur un pantographe (104) et/ou un paramètre représentatif de la position d'un pantographe (104) est détecté,
- au moins un paramètre d'état caractérisant la position du véhicule (101) est détecté, et
- l'association de la classification actuelle du danger est produite en utilisant le paramètre représentatif de l'approvisionnement en énergie du véhicule (101) et le paramètre d'état caractérisant la position du véhicule (101),
- en fonction de la classification actuelle du danger, en particulier, la commutation de l'approvisionnement en énergie sur une source d'énergie embarquée (114) du véhicule (101) étant déclenchée et/ou un dispositif de signalisation, en particulier pour le conducteur, étant activé et/ou l'actionnement de dispositifs d'urgence ou et/ou de secours du véhicule (101), en particulier un éclairage de sécurité et/ou un déverrouillage des portes, étant déclenché et/ou un avertissement automatique d'un poste de commande centralisé étant déclenché, ledit avertissement comprenant en particulier une information sur la position du véhicule (101).
